# EUROPEAN PATENT APPLICATION

(11) **EP 1 857 414 A1**
(43) Date of publication of application: **21.11.2007**
(21) Application number: 06713859.4
(22) Date of filing: 16.02.2006
(51) Int. Cl.: C01G 49/02, B01D 53/46, B01J 20/06, B01J 20/28, B01J 20/30, C02F 1/28

(54) **METHOD FOR PRODUCING IRON OXYHYDROXIDE AND ADSORBING MATERIAL COMPRISING IRON OXYHYDROXIDE**

(30) Priority: 16.02.2005 JP 2005038605; 07.06.2005 JP 2005167553
(71) Applicant: Japan Science and Technology Agency, Kawaguchi-shi, Saitama 332-0012 (JP); Shiga Prefecture Industrial Support Center, Otsu-shi, Shida 5200806 (JP); Kyoto University, Kyoto-shi, Kyoto 606-8501 (JP)
(72) Inventor: MAE, Kazuhiro, Tokyo University, Grad. Sch. Engin., Kyoto-shi, Kyoto, 6158510 (JP); MAKI, Taisuke, Kyoto University, Grad. Sch. Engin., Kyoto-shi, Kyoto 6158510 (JP); YAMAMOTO, Atsushi, Shiga Prefect. ind. Sup. Center, Hikone-shi, Shiga 5220057 (JP)
(74) Representative: Müller-Boré & Partner Patentanwälte
(86) International application number: PCT/JP2006/302718
(87) International publication number: WO 2006/088083

(57) **Abstract**

The present invention provides a method for advantageously producing an iron oxyhydroxide exhibiting excellent capability of adsorbing harmful substances, such as a phosphrous components and endocrine disrupting chemicals, which are contained in industrial wastewater, exhaust gases, etc., and an adsorbent material comprising the iron oxyhydroxide produced by the method as a main component. Specifically, the present invention provides an adsorbent material produced by a method comprising the steps of:
(a) adding a base to an aqueous iron ion-containing solution, adjusting the pH of the resultant mixture to 9 or less, to form a precipitate that contains an iron oxyhydroxide;
(b) drying the precipitate at a temperature of 100°C or lower to obtain an iron oxyhydroxide;
(c) contacting the resultant iron oxyhydroxide with water; and
(d) subjecting the resultant iron oxyhydroxide to a heat treatment under a gas atmosphere having an inert gas concentration of 80% or greater at a temperature of 100 to 280°C.

## Description

### TECHNICAL FIELD

The present invention relates to a method for producing an iron oxyhydroxide and an iron oxyhydroxide-containing adsorbent material. More specifically, the present invention provides a method for advantageously producing an iron oxyhydroxide with an excellent ability for adsorbing phosphrous components and like toxic substances contained in industrial wastewater, exhaust gases, etc., and an adsorbent material comprising, as a main component, the iron oxyhydroxide that is produced by the method.

### BACKGROUND OF THE INVENTION

Recently, various chemical substances are manufactured and used attributable to scientific and technological advances. There are many chemical substances that harmfully affect human health and the ecosystem. Examples of toxic substances to be removed from water include organic or inorganic phosphorus, fluorine, arsenic, molybdenum, chromium, antimony, selenium, boron, tellurium, beryllium, and cyanogen. Examples of toxic substances to be removed from an exhaust gas include hydrogen sulfide, mercaptan, hydrocyanic acid, hydrogen fluoride, hydrogen chloride, SOₓ and NOₓ, and phosphorus, arsenic, antimony, sulfur, selenium, tellurium compounds, and cyano compounds.

The above-mentioned toxic substances are sometimes contained in drinking water, tap water, mineral water, medical treatment water, agricultural water, industrial wastewater, soils, air, exhaust gases, etc., in a form of dissolution, suspension, emulsion, or as solidified or floated substances, and several attempts have been made to separate and remove these toxic substances therefrom.

In particular, eutrophication in public closed water bodies, such as lakes and basins, is a serious social problem. When nitrogen, phosphorus and like nutritive salts are flown into lakes, marshes, etc., without being removed, this causes algae bloom and unduly increases the organic concentration in the water area, even if BOD (biochemical oxygen demand) related organics are removed. Therefore, nitrogen and phosphorus should be removed from lakes, marshes, etc. In particular, because exhaustion of phosphorus is concerned, there is a demand for establishing a system by which phosphorus is removed and recovered from such water bodies and domestic wastewater.

Various iron-based adsorbent materials for removing toxic chemical substances from industrial wastewater, etc., have been proposed. For example, Patent Document 1 discloses an oxyhydroxide having a pore size of 0.1 to 50 nm and a specific surface area of 15 to 200 m² /g obtained by heating oxyhydroxide having a grain size of 50 µm or less at 200 to 500°C to evaporate water of crystallization in the hydrous iron oxide. However, because the heat treatment of Patent Document 1 is conducted at 200 to 500°C under a waste combustion gas atmosphere, there is a decrease in the specific surface area of adsorption sites and the pore size distribution dV/dR in the iron-based adsorbent material, which are necessary for adsorbing phosphorus components and like toxic substances. This results in insufficient adsorptive power.

An anion adsorbent material formed of an amorphous iron hydroxide-based precipitate obtained by adding an alkali to an iron-ion solution, adjusting its pH to 3, and drying it at 60°C is known (see Patent Document 2). However, because 1 x 10⁻³ mol/dm³ of trivalent iron ion remain in the solution with pH 3, iron hydroxide cannot be precipitated stably. Furthermore, the adsorbent material obtained by the method of Patent Document 2 has a small specific surface area, and therefore its adsorptive power is insufficient.

A method for obtaining an aggregation of fine particle iron oxyhydroxide having a BET specific surface area of 50 to 500 m²/g is proposed (see Patent Document 3). However, because the iron oxyhydroxide of Patent Document 3 has a very small particle diameter, i.e., in a nano order, it exhibits excellent reactivity but its handling is difficult, because there is a risk of scattering of particles, ignition due to friction of particles, etc. Furthermore, recovery of the adsorbed substances is difficult in this method.

Patent Document 4 discloses a method wherein an iron oxyhydroxide powder having an average particle diameter of 0.01 to 2.0 µm, which serves as an iron compound catalyst for reducing dioxin, is obtained by mixing an aqueous sodium hydroxide solution with an aqueous iron (II) nitrate solution under agitation at 47°C, and then conducting aeration. However, because the iron oxyhydroxide of Patent Document 4 has a small particle diameter, i.e., in a micro order, its handling is difficult as the same as the iron oxyhydroxide of Patent Document 3, and recovery of adsorbed substances is also difficult.

Therefore, a method for producing an iron oxyhydroxide that can satisfactorily adsorb toxic substances, control its pore size distribution (dV/dR) in nano-order, and an adsorbent material that can be easily handled have been sought.
[Patent Document 1] Japanese Unexamined Patent Publication No. 2003-154234
[Patent Document 2] Japanese Unexamined Patent Publication No. 2003-334542
[Patent Document 3] Japanese Unexamined Patent Publication No. 2004-509752
[Patent Document 4] Japanese Unexamined Patent Publication No. 1999-267507

### SUMMARY OF THE INVENTION

### [Problem to be Solved by the Invention]

In view of the above-described problems, an object of the present invention is to provide a method for advantageously producing an iron oxyhydroxide whose pore radius is suitably controlled so as to have an excellent ability for adsorbing toxic components contained in industrial wastewater and exhaust gases, and endocrine disrupters and like toxic substances. Another object of the present invention is to provide an adsorbent material obtained by such a method.

### [Means for Solving the Problem]

The present inventors conducted extensive research and found that the above objects can be achieved by producing iron oxyhydroxide by following specific processes. The present invention has been accomplished based on this finding with further study.

In other words, the present invention provides a method for producing an iron oxyhydroxide and an adsorbent material comprising an iron oxyhydroxide as below (hereunder, this invention is referred to as "the first embodiment").
(1) A method for producing an iron oxyhydroxide comprising the steps of:
   (I-a) : adding a base to an aqueous iron ion-containing solution and adjusting its pH to 9 or less to obtain a precipitate that contains an iron oxyhydroxide;
   (I-b): drying the resultant precipitate at a temperature of 100°C or lower to obtain an iron oxyhydroxide;
   (I-c): contacting the resultant iron oxyhydroxide with water; and
   (I-d): subjecting the resultant iron oxyhydroxide to a heat treatment in a gas atmosphere having an inert gas concentration of 80% or greater at a temperature in the range from 100 to 280°C.
(2) An adsorbent material comprising the iron oxyhydroxide produced by the method described in Item (1) as a main component.
   The present invention also provides a method for producing an iron oxyhydroxide and an adsorbent material comprising an iron oxyhydroxide as described below (hereunder, this invention is referred to as "the second embodiment").
(3) A method for producing an iron oxyhydroxide comprising the steps of:
   (II-a): adding a base to an aqueous iron ion-containing solution and adjusting its pH to 7 or less to obtain a precipitate that contains an iron oxyhydroxide; and
   (II-b): heating the resultant precipitate at a temperature of 100°C or lower under an inert gas atmosphere having an oxygen concentration of 20% or less to obtain an iron oxyhydroxide.
(4) An adsorbent material comprising the iron oxyhydroxide produced by the method described in Item (3) as a main component.
   The present inventors also found that it is possible to render an iron oxyhydroxide-containing adsorbent material with a high adsorption selectivity to specific anion species by subjecting the adsorbent material to a specific treatment. Furthermore, the present inventors found that, by utilizing such a technique, a specific element can be efficiently recovered from water containing two or more anion species by selectively adsorbing and desorbing a specific anion species containing the target element. The present invention has been accomplished based on these findings.
   In other words, the present invention provides a below-described method for producing an iron oxyhydroxide-containing adsorbent material, and a method for selectively separating and recovering a specific anion species from water that contains a plurality of anion species by using the resultant iron oxyhydroxide-containing adsorbent material (hereunder this invention is referred to as the "third embodiment") as described below:
(5) An iron oxyhydroxide-containing adsorbent material obtained by the process as below.
   (III-a): adding a base to an aqueous iron ion-containing solution and adjusting its pH to 9 or less to obtain a precipitate that contains an iron oxyhydroxide;
   (III-b): drying the resultant precipitate at a temperature of 100°C or lower to obtain an iron oxyhydroxide; and
      treating the resultant iron oxyhydroxide with an aqueous base solution and then with water,
      (hereunder, the thus-obtained iron oxyhydroxide-containing adsorbent material is referred to as "iron oxyhydroxide-containing adsorbent material A").
(6) A method for selectively separating and recovering phosphate ion comprising the step of contacting water that contains phosphate ion and other anion species to the "iron oxyhydroxide-containing adsorbent material A".
(7) A method for selectively separating and recovering phosphate ion and nitrate ion comprising the step of sequentially contacting water that contains phosphate ion and nitrate ion to "iron oxyhydroxide-containing adsorbent material A", and then to an iron oxyhydroxide-containing adsorbent material obtained by treating an iron oxyhydroxide with an aqueous base solution and hydrochloric acid (hereunder this adsorbent material is referred to as "iron oxyhydroxide-containing adsorbent material B").

In this specification, "%" indicates "mol%" unless otherwise specified.

The present invention is explained in detail below.

### I. First Embodiment

The method for producing an iron oxyhydroxide of the first embodiment comprising the following steps sequentially conducted.
(I-a): adding a base to an aqueous iron ion-containing solution and adjusting its pH to 9 or less so that a precipitate that contains an iron oxyhydroxide is formed;
(I-b): drying the resultant precipitate at a temperature of 100°C or lower to obtain an iron oxyhydroxide;
(I-c): contacting the resultant iron oxyhydroxide with water; and
(I-d): subjecting the resultant iron oxyhydroxide to a heat treatment under a gas atmosphere having an inert gas concentration of 80% or greater at a temperature in the range from 100 to 280°C.

Among these steps, Steps (I-c) and (I-d) are main features of the first embodiment.

Examples of aqueous iron ion-containing solutions usable in Step (I-a) as a raw material solution include aqueous solutions of trivalent or divalent iron ion. Examples of aqueous solutions containing trivalent iron include those containing iron (III) chloride [FeCl_{3]}, iron (III) sulfate [Fe₂(SO₄)₃], iron (III) nitrate [Fe(NO₃)₃], iron (III) oxalate [Fe₂(C₂O₄)₂] and like ferric compounds. Examples of aqueous solutions containing divalent iron ion include those containing iron (II) chloride [FeCl₂], iron (II) sulfate [FeSO₄], iron (II) nitrate [Fe(NO₃)₂], iron (II) acetate [Fe (CH₃CO₂)₂], iron (II) oxalate [FeC₂O₄] and like ferrous compounds. Among these, aqueous solutions containing trivalent iron ion are preferable in view of their reactivities, and an aqueous solution of iron (III) chloride [FeCl_{3]} is particularly preferable.

A base is used to neutralize the aqueous iron ion-containing solution and adjust its pH to 9 or less, so that a precipitate that contains an iron oxyhydroxide is produced. Examples of usable bases include NaOH, KOH, Na₂CO₃, K₂CO₃, CaO, Ca(OH)₂, CaCO₃, NH₃, NH₄OH, MgO, MgCO₃ and like inorganic bases. Among these, sodium hydroxide (NaOH) is particularly preferable. Such base is usually added to an aqueous iron ion-containing solution in a form of an aqueous solution.

There are no limitations to the concentrations of the aqueous iron ion-containing solution and the base. From the view of easily controlling the reaction of the aqueous iron ion-containing solution with the base, the concentration of the aqueous iron ion-containing solution is preferably 0.01 to 5 mol/l, and more preferably 0.05 to 3 mol/l. The concentration of the base-containing aqueous solution is preferably 0.1 to 10 mol/l, and more preferably 1 to 5 mol/l.

There are no limitations to the conditions for adding a base-containing aqueous solution to an aqueous iron ion-containing solution and the addition may be conducted, for example, at room temperature under agitation.

In Step (I-a), pH is an important factor. Iron (III) hydroxide starts forming from pH 3 due to its solubility product. Because formation of iron oxyhydroxide crystals is in its initial stage in an aqueous iron ion-containing solution having a pH of 3, 1 x 10⁻³ mol/dm³ of trivalent iron ion still remain therein, and therefore stable precipitation of iron oxyhydroxide may be difficult. Therefore, in order to obtain an iron oxyhydroxide having great many anion adsorption sites in a stably and highly pure manner, the pH should be generally 3.3 to 9, preferably 3.4 to 7, more preferably 3.5 to 6, and particularly preferably 3.5 to 5.5.

The precipitate obtained in Step (I-a) is filtered out by suction filtration etc., and the filtered out precipitate is then supplied to Step (I-b). Filtration of the precipitate may be conducted by suction filtration, etc., but it is preferable to conduct decantation to remove impurities.

In Step (I-b), the precipitate is dried at a temperature of 100°C or lower in order to prevent oxidation caused by drying at a high temperature. If the temperature exceeds 100°C, the precipitate can be dried quickly but the BET specific surface area and the pore size distribution (dV/dR) of the resultant iron oxyhydroxide may be decreased by the adverse affect of oxidation. In contrast, if the temperature is unduly low, drying may take a too long time and not practicable. Therefore, the drying temperature is preferably 20 to 80°C, more preferably 30 to 70°C, and particularly preferably 40 to 60°C. Drying may be conducted in air, vacuum, or an inert gas. The drying time is not particularly limited but is generally 2 hours to 3 days, and preferably 5 to 24 hours.

The iron oxyhydroxide obtained in Step (I-b) is acicular having a width (D) of generally 10 to 500 nm, and preferably 50 to 200 nm, wherein the ratio of the length to the width (L/D) of the acicular is generally 5/1 to 50/1, and preferably 5/1 to 20/1.

The thus-obtained iron oxyhydroxide is acicular and coagulates to form aggregates. The average particle diameter of the iron oxyhydroxide aggregates is generally 80 to 300 µm, and preferably 100 to 200 µm.

Here, the average particle diameter means a median diameter calculated from the particle size distribution on volume basis measured by a laser diffraction scattering method using a laser diffraction/scattering particle size distribution analyzer (for example, LA-920, product of Horiba Ltd.).

In Step (I-c) of the method of the present invention, the iron oxyhydroxide obtained in Step (I-b) is brought into contact with water to remove NaOH, NaCl, etc., which may reduce the specific surface area. The BET specific surface area of the iron oxyhydroxide is increased by the water treatment in Step (I-c) to at least 1.2 times and, under preferable conditions, 2.5 to 3 times compare to the iron oxyhydroxide obtained in Step (I-b). As a result, the specific surface area measured by a BET method becomes preferably 70 to 250 m²/g, more preferably 80 to 210 m²/g, and particularly preferably 140 to 200 m²/g.

The probable reason that the specific surface area is increased by the water treatment in Step (I-c) is as below. When NaOH or like base is added to a trivalent aqueous iron ion-containing solution, nano-order crystals of NaCl or like water-soluble salt are formed in the FeOOH aggregates as impurities. Such crystals dissolve when they come into contact with water, and the portions where the water-soluble salt has dissolved become pores.

In Step (I-c), after contacting with water, drying may be conducted if necessary. There is no limitation to the drying temperature, but preferably not exceeding 100°C and more preferably 30 to 70°C.

In Step (I-d), the resultant iron oxyhydroxide is heated under a gas atmosphere having an inert gas concentration of 80% or greater (preferably, under an atmosphere having a nitrogen concentration of 80% or greater) at 100 to 280°C. In order to prevent the reduction of pore size distribution (dV/dR) and specific surface area of the pores, which will serve as adsorption sites, caused by the heat treatment and to prevent sintering between particles, it is necessary that the heating be conducted under an atmosphere hardly affected by oxidization. Therefore, in the present invention, crystal water in the iron oxyhydroxide is evaporated by conducting the heat treatment under a gas atmosphere having an inert gas concentration of 80% or greater, so that the specific surface area and the pore size distribution can be controlled (increased) so as to obtain the pore diameter optimal for the radius of the ion species to be adsorbed.

The atmosphere in Step (I-d) preferably has a nitrogen concentration of 80% or greater and an oxygen concentration of 20% or less, more preferably a nitrogen concentration of 90% or greater and an oxygen concentration of 10% or less, and particularly preferably a nitrogen concentration of 98% or greater and an oxygen concentration of 2% or less.

An unduly low heating temperature may result in prolonged heating time, and thus not practicable. If the temperature exceeds 280°C, the heating time can be reduced, but reliable retention of adsorption sites becomes difficult. Accordingly, the heat temperature is preferably 120 to 260°C, and more preferably 130 to 230°C.

The heating time is not limited but generally 0.5 hour to 2 days and preferably 1 hour to 24 hours.

By the treatment in Step (I-d), the BET specific surface area of iron oxyhydroxide is increased to at least 1.2 times and, under preferable conditions, 1.5 to 1.8 times compared to the iron oxyhydroxide obtained in Step (I-c). As a result, the specific surface area measured by a BET method becomes preferably 100 to 450 m²/g, more preferably 120 to 380 m²/g, and particularly preferably 200 to 300 m²/g. This enhances the above-described effects for separating and removing toxic substances.

The pore size distribution (dV/dR), wherein dV represents pore volume and dR represents pore radius, measured by the BJH method (Barrett-Joyner-Halenda Method) can be controlled so as to fall within the range of preferably 100 to 300 mm³/g/nm, more preferably 110 to 280 mm³/g/nm, and particularly preferably 120 to 250 mm³/g/nm.

By suitably selecting the heating time, the range of pore size distribution can be made 7 nm or less, preferably within the range from 0.5 to 4.5 nm, and more preferably 0.8 to 3.9 nm, so that iron oxyhydroxide having a homogeneous pore radius can be obtained.

In the method of the present invention, by suitably selecting the conditions in Steps (I-a) to (I-d), iron oxyhydroxides having different BET specific surface areas, pore size distributions (dV/dR), pore diameters, and particle diameters can be obtained.

There are three types of iron oxyhydroxide, i.e., α-FeOOH (goethite), β-FeOOH (akaganeite) and γ-FeOOH (lepidocrocite). The iron oxyhydroxide obtained by the method of the present invention is believed to be fine particles of β-FeOOH having a low crystallinity, and such fine particles form large aggregates having a form of a glossy black particle. Such aggregates have great many pores. The average particle diameter of the aggregates are generally 80 to 300 µm and preferably 100 to 200 µm.

The iron oxyhydroxide obtained by the method of the present invention has a large specific surface area of 100 to 450 m²/g, and many adsorption sites having a pore size distribution (dV/dR) of 100 to 300 mm³/g/nm, which is suitable for adsorption and capture of phosphate ion and like anion species. Furthermore, because the peak of pore radius distribution can be suitably selected from 0.8 to 3 nm, the pore radius can be made optimum for the ion radius of the element to be captured or adsorbed, so that toxic substances of various sizes can be selectively and effectively removed. Furthermore, the range of pore radius distribution can be made 7 nm or less. This imparts the iron oxyhydroxide to have properties similar to those of a molecular sieve of zeolite, etc.

The adsorbent material comprising the iron oxyhydroxide of the present invention as a main component may be used singly or in combination with other composite metal hydroxides. The form of the adsorbent material may be powder as it is. However, because the adsorbent materials are used by being placed in treatment tanks in water-purification facilities, it is preferable that they are formed into granules or filtration agents. Granulation can be conducted by blending about 1 to about 40 weight% of known binders to the iron oxyhydroxide of the present invention, adding a necessary amount of water, mixing using a kneader or the like, and then forming the resultant mixture into granules using a granular.

When phosphorus components, endocrine disrupting chemicals and like toxic substances contained in water are removed using an adsorbent material comprising the iron oxyhydroxide of the present invention as a main component, a possible process is that the adsorbent material is placed in a column (tank), followed by letting water flow therein. In this case, the BET specific surface area of the iron oxyhydroxide particles and pore volume can be suitably selected depending on the toxic substances to be captured and removed.

The adsorbent material of the present invention is easily reusable and therefore highly practicable, and has a feature that adsorbed anion species can be effectively recovered by desorption. Specifically, water that contains at least one anion species selected from the group consisting of phosphate ion, nitrate ion and halide ions is brought into contact with the iron oxyhydroxide-containing adsorbent material of the present invention to make such ion species to be adsorbed and then the adsorbed anion species is desorbed (eluted) so that the anion species can be effectively recovered. Note that, desorption (elution) can be conducted by bringing about 0.1 to about 5 mol/l aqueous NaOH solution into contact with an iron oxyhydroxide.

### II. Second Embodiment

In the method for producing an iron oxyhydroxide of the second embodiment, the following steps are sequentially conducted.
(II-a): adding a base to an aqueous iron ion-containing solution and adjusting its pH to 7 or less to obtain a precipitate that contains an iron oxyhydroxide; and
(II-b): heating the resultant precipitate at a temperature of 100°C or lower under an inert gas atmosphere having an oxygen concentration of 20% or less to obtain an iron oxyhydroxide.
(II-b) is a main feature of the second embodiment.

Examples of aqueous iron ion-containing solutions usable in Step (II-a) as a raw material solution include aqueous solutions containing a trivalent or divalent iron ion. Examples of aqueous solutions containing trivalent iron ion include those containing iron (III) chloride [FeCl₃], iron (III) sulfate [Fe₂(SO₄)₃], iron (III) nitrate [Fe(NO₃)₃], iron (III) oxalate [Fe₂(C₂O₄)₂] and like ferric compounds. Examples of aqueous solutions containing divalent iron ion include those containing iron (II) chloride [FeCl₂], iron (II) sulfate [FeSO₄], iron (II) nitrate [Fe(NO₃)₂], iron (II) acetate [Fe(CH₃CO₂)₂], iron (II) oxalate [FeC₂O₄] and like ferrous compounds. Among these, aqueous solutions containing trivalent iron ion are preferable in view of their reactivities, and an aqueous solution of iron (III) chloride [FeCl₃] is particularly preferable.

A base is used to neutralize the aqueous iron ion-containing solution and adjust its pH to 7 or less, so that a precipitation that contains an iron oxyhydroxide is produced. Examples of usable bases include NaOH, KOH, Na₂CO₃, K₂CO₃, CaO, Ca(OH)₂, CaCO₃, NH₃, NH₄OH, MgO, MgCO₃ and like inorganic bases. Among these, sodium hydroxide (NaOH) is particularly preferable. Such base is usually added into an aqueous iron ion-containing solution in a form of an aqueous solution.

There are no limitations to the concentrations of the aqueous iron ion-containing solution and the base. From the view of easily controlling the reaction of the aqueous iron ion-containing solution with the base, the concentration of the aqueous iron ion-containing solution is preferably 0.01 to 5 mol/l, and more preferably 0.05 to 3 mol/l. The concentration of the base-containing aqueous solution is preferably 0.1 to 10 mol/l, and more preferably 1 to 5 mol/l.

There are no limitations to the conditions for adding a base (or a base-containing aqueous solution) to an aqueous iron ion-containing solution and the addition may be conducted at room temperature under agitation.

In Step (II-a), pH is an important factor. Formation of iron (III) hydroxide starts from pH 3 due to its solubility product. Because formation of iron oxyhydroxide crystals is in its initial stage in an aqueous iron ion-containing solution having a pH of 3, 1 x 10⁻³ mol/dm³ of trivalent iron ion still remain therein, and therefore stable precipitation of iron oxyhydroxide may be difficult. Therefore, in order to obtain an iron oxyhydroxide having great many anion adsorption sites in a stably and highly pure manner, the pH should be preferably 3.3 to 7, and more preferably 3.9 to 6.

There is not limitation to the atmosphere under which treatment (II-a) is conducted; however, in order to prevent formation of Fe₂O₃, use of an inert gas is preferable. Examples of usable inert gas atmospheres include those containing nitrogen, carbon dioxide, helium, neon, krypton, xenon, radon or like inert gas.

The precipitate obtained in Step (II-a) is filtered out and then supplied to Step (II-b). Filtration of the precipitate can be conducted by suction filtration, etc., but conducting decantation is preferable to remove impurities.

In order to prevent oxidation caused by a high temperature, the precipitate is heated in Step (II-b) under an inert gas atmosphere having an oxygen concentration of 20% or less at a temperature of 100°C or lower. Heating under such a gas atmosphere makes it possible to control pores at a relatively low temperature and obtain relatively large iron oxyhydroxide aggregates.

An inert gas atmosphere having an oxygen concentration of 20% or less means a gas atmosphere whose oxygen concentration in the gas atmosphere falls within a range of 0 to 20%. The inert gas concentration in the gas atmosphere is preferably 90% or greater, more preferably 95% or greater, and particularly preferably 98% or greater. At least one member selected from the group consisting of nitrogen, argon, carbon dioxide, and helium can be used as the inert gas. Among these, carbon dioxide is particularly preferable. The inert gas atmosphere having an oxygen concentration of 20% or less contains carbon dioxide preferably 50% or greater, more preferably 90% or greater, and particularly preferably 95% or greater. The less oxygen concentration, the more preferable it would be. The oxygen concentration is generally 20% or less, preferably 10% or less, and more preferably 5% or less. If the oxygen concentration is too high, the specific surface area and adsorptive power decrease due to formation of Fe₂O₃.

For example, if Step (II-b) is conducted under a carbon dioxide atmosphere, the median particle diameter of the iron oxyhydroxide aggregates can be increased to about 4 times of that obtained in air. This increases the specific surface area, and therefore the adsorption ability does not decrease but rather increases even when the particle diameter is increased. Furthermore, having a large particle diameter can reduce the pressure loss during column adsorption, and makes it possible to obtain more desirable particle size by grinding, etc., if necessary.

If the heating temperature exceeds 100°C, the BET specific surface area and the pore size distribution (dV/dR) of iron oxyhydroxide may decrease due to adverse affects of thermal decomposition. However, if the temperature is unduly low, formation of aggregates may take too long, and thus not practicable. Therefore, the heating temperature is preferably 30 to 100°C, and more preferably 40 to 80°C. There is no limitation to the heating time and it is generally 2 hours to 3 days, and preferably 5 to 24 hours.

The iron oxyhydroxide obtained in Step (II-b) is acicular having a width (D) of generally 10 to 500 nm, and preferably 50 to 200 nm, wherein the ratio of the length to the width (L/D) of the acicular is generally 5/1 to 50/1, and preferably 5/1 to 20/1.

The thus-obtained iron oxyhydroxide is acicular and coagulates to form aggregates. The median particle diameter of the iron oxyhydroxide aggregates is generally 0.1 to 5.0 mm and preferably 0.15 to 3.0 mm.

Here, the median particle diameter of iron oxyhydroxide aggregates means a median particle diameter (D50: 50% accumulation) measured by dry sieving method using a ro-tap sieve shaker.

In the method of the present invention, it is preferable that the following steps be conducted after Step (II-b):
(II-c): contacting the resultant iron oxyhydroxide with water; and
(II-d): heating the precipitate obtained in Step (II-c) at a temperature in the range from 100 to 250°C under an inert gas atmosphere having an oxygen concentration of 20% or less.

In Step (II-c), by contacting the iron oxyhydroxide obtained in Step (II-b) with water, impurities, such as NaOH and NaCl, which decrease the specific surface area, can be removed. By treating with water in Step (II-c), the BET specific surface area of iron oxyhydroxide is increased to at least 1.2 times and, under preferable conditions, 2.5 to 3 times compared to the iron oxyhydroxide obtained in Step (II-b). As a result, the specific surface area measured by the BET method becomes preferably 70 to 300 m²/g, more preferably 80 to 290 m²/g, and particularly preferably 140 to 280 m²/g.

The specific surface area is increased by the water treatment in Step (II-c) probably because of the reason below.

In Step (II-a), NaOH or like base is added to an aqueous solution containing a divalent or trivalent iron ion, and therefore nano-order crystals of NaCl or like water-soluble salt are formed and embedded in the FeOOH aggregates as impurities, such crystals dissolve when they come into contact with water, and the portions where the water-soluble salt previously existed become pores.

In Step (II-c), after contacting with water, the iron oxyhydroxide may be dried if necessary. There is no limitation to the drying temperature, but preferably not exceeding 100°C and more preferably within the range from 30 to 70°C. There is no limitation to the atmosphere under which the drying is conducted, but, in order to prevent formation of Fe₂O₃, an inert gas atmosphere having an oxygen concentration of 20% or less is preferable and a carbon dioxide atmosphere is more preferable.

In Step (II-d), the resultant iron oxyhydroxide is heated in an inert gas atmosphere having an oxygen concentration of 20% or less at 100 to 250°C. In order to prevent the pores, which will serve as adsorption sites, from being decreased (i.e., reductions of pore size distribution (dV/dR) and the specific surface area) by the heat treatment and sintering between particles, it is necessary that the heating be conducted under an atmosphere with little influence from oxygen. Therefore, in the present invention, crystal water in the iron oxyhydroxide is evaporated by conducting the heat treatment under an inert gas atmosphere having an oxygen concentration of 20% or less, so that the specific surface area and the pore size distribution can be controlled (increased) so as to obtain the pore diameter optimal for the radius of the ion species to be adsorbed.

The atmosphere in Step (II-d) preferably has a nitrogen concentration of 80% or greater and an oxygen concentration of 20% or less, more preferably a nitrogen concentration of 90% or greater and an oxygen concentration of 10% or less, and particularly preferably a nitrogen concentration of 98% or greater and an oxygen concentration of 2% or less.

An unduly low heating temperature prolongs the heating time, and thus not practicable. If the temperature exceeds 280°C, the heating time can be reduced, but reliable retention of adsorption sites becomes difficult. Accordingly, the heating temperature is preferably 110 to 200°C, and more preferably 120 to 180°C.

There is no limitation to the heating time, but is generally 0.5 hour to 2 days and preferably 1 hour to 24 hours.

By the treatment of Step (II-d), the BET specific surface area of iron oxyhydroxide is increased to at least 1.2 times and, under preferable conditions, 1.5 to 1.8 times compared to the iron oxyhydroxide obtained in Step (II-c). As a result, the specific surface area measured by the BET method becomes preferably 100 to 450 m²/g, more preferably 120 to 350 m²/g, and particularly preferably 200 to 300 m²/g. This enhances the above-described effects for separation and removal of toxic substances.

The pore size distribution (dV/dR), wherein dV represents pore volume and dR represents pore radius, measured by the BJH method (Barrett-Joyner-Halenda Method) can be controlled so as to fall within the range of preferably 100 to 300 mm³/g/nm, more preferably 110 to 280 mm³/g/nm, and particularly preferably 120 to 250 mm³/g/nm.

By suitably selecting the heating time, the range of pore radius distribution can be made 7 nm or less, preferably within the range from 0.5 to 4.5 nm, and more preferably 0.8 to 3.9 nm, so that iron oxyhydroxide having a homogeneous pore radius can be obtained.

In the method of the present invention, by suitably controlling the conditions in Steps (II-a) to (II-d), iron oxyhydroxides having different BET specific surface areas, pore size distribution (dV/dR), pore diameters, and particle diameters can be obtained.

There are three types of iron oxyhydroxide, i.e., α-FeOOH (goethite), β-FeOOH (akaganeite) and γ-FeOOH (lepidocrocite). The iron oxyhydroxide obtained by the method of the present invention is believed to be fine particles of β-FeOOH having a low crystallinity, and such fine particles form large aggregates in a form of a glossy black particle. Such aggregates have great many pores. The median particle diameter of the aggregates is generally 0.3 to 4.0 mm and preferably 0.5 to 2.0 mm.

The iron oxyhydroxide obtained by the method of the present invention has a large BET specific surface area of 100 to 450 m²/g, and many adsorption sites having a pore size distribution (dV/dR) of 100 to 300 mm³/g/nm, which is suitable for adsorption and capture of phosphate ion and like anion species. Furthermore, because the peak of pore radius distribution can be suitably controlled within the range from 0.8 to 3 nm, the pore radius can be made optimum for the ion radius of the element to be captured or adsorbed, so that toxic substances having various sizes can be selectively and effectively removed. Furthermore, the range of the pore radius distribution can be made 7 nm or less. This imparts the iron oxyhydroxide to have the functions similar to those of molecular sieves of zeolite, etc.

The adsorbent material comprising the iron oxyhydroxide of the present invention as a main component may be used singly or in combination with other composite metal hydroxides. The form of the adsorbent material may be powder as it is. However, because the adsorbent materials are used by being placed in treatment tanks in water-purification facilities, it is preferable that they are formed into granules or filtration agents. Granulation can be conducted by blending about 1 to about 40 weight% of known binders to the iron oxyhydroxide of the present invention, adding a necessary amount of water, mixing by a kneader or the like, and then forming into granules using a granulator.

When phosphorus components, endocrine disrupting chemicals and like toxic substances contained in water are removed by using an adsorbent material containing the iron oxyhydroxide of the present invention as a main component, the BET specific surface area and pore volume of the iron oxyhydroxide particles can be suitably selected so that the target toxic substances can be easily captured and removed.

The adsorbent material of the present invention is an energy-saving type adsorbent material whose pore size can be controlled even at a low temperature. The adsorbent material of the present invention is easily reusable and therefore is highly practicable, wherein anion species can be effectively recovered the adsorbed anion species by desorption. Specifically, water that contains at least one species of anion selected from the group consisting of phosphate ion, nitrate ion and halide ions is brought into contact with the iron oxyhydroxide-containing adsorbent material of the present invention so that the anion species is adsorbed and then the adsorbed anion species is desorbed (eluted), effectively recovering the anion species. Note that, the desorption (elution) can be conducted by bringing about 0.1 to about 5 mol/l aqueous NaOH solution into contact with the iron oxyhydroxide.

### III. Third Embodiment

### Iron oxyhydroxide-containing adsorbent material A

The "iron oxyhydroxide-containing adsorbent material A" of the third embodiment is obtained by sequentially treating an iron oxyhydroxide with a base-containing aqueous solution and water.

The iron oxyhydroxide used as a starting material for the "iron oxyhydroxide-containing adsorbent material A" can typically be prepared by following the steps below:
(III-a): adding a base to an aqueous iron ion-containing solution, adjusting its pH to 9 or less to obtain a precipitate that contains an iron oxyhydroxide; and
(III-b) : drying the resultant precipitate at a temperature of 100°C or lower to obtain an iron oxyhydroxide.

Examples of aqueous iron ion-containing solutions usable in Step (III-a) as a raw material solution include aqueous solutions containing a trivalent or divalent iron ion. Examples of aqueous solutions containing trivalent iron ion include those containing iron (III) chloride [FeCl₃], iron (III) sulfate [Fe₂(SO₄)₃], iron (III) nitrate [Fe(NO₃)₃], iron (III) oxalate [Fe₂(C₂O₄)₂] and like ferric compounds. Examples of aqueous solutions containing divalent iron ion include those containing iron (II) chloride [FeCl₂], iron (II) sulfate [FeSO₄], iron (II) nitrate [Fe(NO₃)₂], iron (II) acetate [Fe(CH₃CO₂)₂], iron (II) oxalate [FeC₂O₄] and like ferrous compounds. Among these, aqueous solutions containing a trivalent iron ion are preferably in view of their reactivities, and an aqueous solution of iron (III) chloride [FeCl_{3]} is particularly preferable.

A base is used to neutralize the aqueous iron ion-containing solution and adjust its pH to 9 or less, so that a precipitate that contains an iron oxyhydroxide is obtained. Examples of usable bases include NaOH, KOH, Na₂CO₃, K₂CO₃, CaO, Ca(OH)₂, CaCO₃, NH₃, NH₄OH MgO, MgCO₃ and like inorganic bases. Among these, sodium hydroxide (NaOH) is particularly preferable. Such base is usually added into an aqueous iron ion-containing solution in a form of an aqueous solution.

There are no limitations to the concentrations of the aqueous iron ion-containing solution and the base. From the view of easily controlling the reaction of the aqueous iron ion-containing solution with the base, the concentration of the aqueous iron ion-containing solution is preferably 0.01 to 5 mol/l, and more preferably 0.05 to 3 mol/l. The concentration of the base-containing aqueous solution is preferably 0.1 to 10 mol/l, and more preferably 1 to 5 mol/l.

There are no limitations to the conditions for adding a base-containing aqueous solution to an aqueous iron ion-containing solution and the addition may be conducted, for example, at room temperature under agitation.

In Step (III-a), the pH is generally adjusted to be 9 or less and preferably within the range from 3.3 to 9. The precipitate obtained in Step (III-a) is filtered out by suction filtration etc., and then supplied to Step (III-b). Filtration of the precipitate can be conducted by suction filtration, etc., but conducting decantation is preferable to remove impurities.

In Step (III-b), in order to prevent oxidation caused by a high temperature, the precipitate is dried at a temperature of 100°C or lower. The drying temperature is preferably 20 to 80°C. Drying may be conducted in air, vacuum, and an inert gas. The drying time is not limited but is generally 2 hours to 4 days.

The iron oxyhydroxide obtained in Step (III-b) is acicular and coagulates to form aggregates. The average particle diameter of iron oxyhydroxide aggregates is generally 0.08 to 5 mm, and preferably 0.01 to 2 mm.

The raw material iron oxyhydroxide can be produced in the manner as described above, but the iron oxyhydroxide produced by the method of "the first embodiment" or "the second embodiment" is preferable.

The thus-obtained iron oxyhydroxide is treated by being brought into contact with a base-containing aqueous solution. Examples of aqueous base solutions include those containing NaOH, KOH, Na₂CO₃, K₂CO₃, CaO, Ca(OH)₂, CaCO₃, NH₃, NH₄OH, MgO, MgCO₃ or like inorganic base. Among these, aqueous solution of NaOH is preferable. There is no limitation to the concentration of the aqueous solution of base as long as it falls within the range about 0.1 to about 5 mol/l. The treating temperature is generally about 10 to about 50°C, and the treating time is generally about 0.1 to about 2 hours.

The iron oxyhydroxide treated with a base is then brought into contact with water so that the adsorbed anion species are desorbed from the adsorption sites of the iron oxyhydroxide. There is no limitation to the water used and tap water or the like may be used, but deionized water (purified water) is preferable.

The above-described base treatment and water treatment may be conducted, in the case of batch type treatment, by soaking the iron oxyhydroxide in an aqueous base solution at room (ordinary) temperature, followed by water treatment if necessary. In the case of flow type treatment, the treatments may be conducted by placing an iron oxyhydroxide in a column, etc., passing an aqueous base solution through the column at room (ordinary) temperature, and then passing water through the column in such an extent that the pH of the discharged water becomes about 6 to about 9.

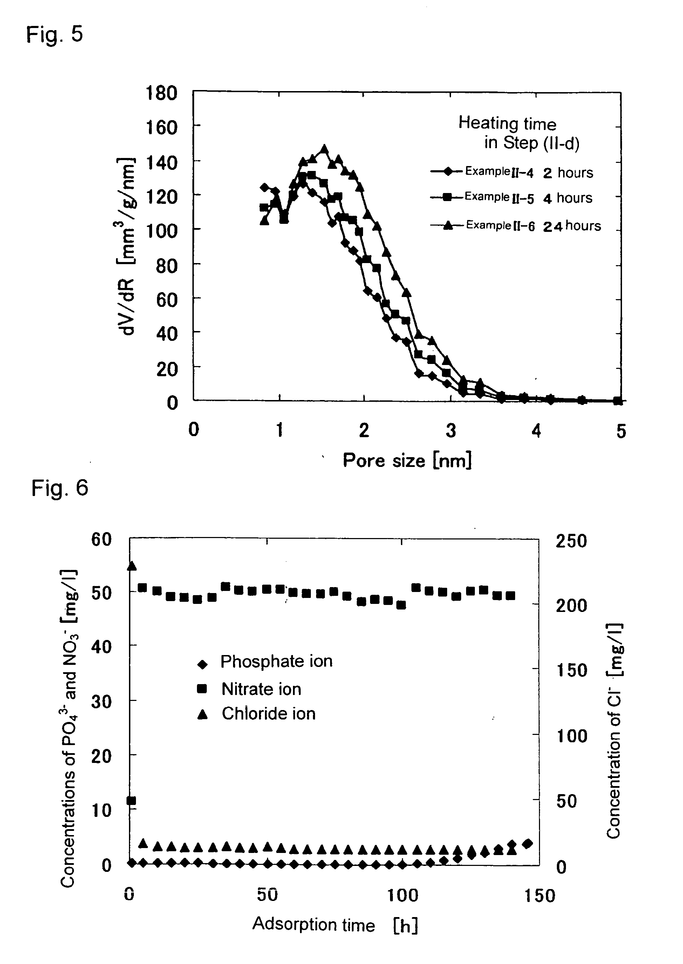

The thus-obtained "iron oxyhydroxide-containing adsorbent material A" exhibits a high adsorption selectivity to phosphate ion. In other words, when water that contains phosphate ion and other anion species (i.e., water to be treated) is brought into contact with the "iron oxyhydroxide-containing adsorbent material A", the phosphate ion can be selectively adsorbed. Test Example III-1(1) and Fig. 6 illustrate the behavior of selective adsorption of phosphate ion to facilitate easy understanding thereof. Subsequently, phosphate ion can be selectively separated and recovered by desorbing the phosphate ion adsorbed by the "iron oxyhydroxide-containing adsorbent material A". The desorption can be conducted by making about 0.1 to about 5 mol/l NaOH aqueous solution in contact with the iron oxyhydroxide.

Specifically, phosphate ion can be adsorbed by passing phosphate ion-containing water through an adsorption column filled with the "iron oxyhydroxide-containing adsorbent material A". There is no limit to the concentration of phosphate ion in the water (water to be treated) as long as it falls within the range, for example, from about 0.1 to about 5 mmol/l. It is preferable that the temperature of the water that contains phosphate ion is about 10 to about 30°C from the viewpoint of adsorption ability and selectivity, and preferable pH is about 3 to about 9. Subsequently, desorption of phosphate ion can be conducted by passing about 0.1 to about 5 mol/l of NaOH aqueous solution through the adsorption column. By repeating the above operation, phosphate ion can be effectively separated and recovered from the water that contains phosphate ion and other anion species.

It is also possible to independently selectively separate and recover phosphate ion and nitrate ion from water that contains phosphate ion and nitrate ion by combining the above-described "iron oxyhydroxide-containing adsorbent material A" with the below-explained "iron oxyhydroxide-containing adsorbent material B".

### Iron oxyhydroxide-containing adsorbent material B

The "iron oxyhydroxide-containing adsorbent material B" can be obtained by treating an iron oxyhydroxide with an aqueous base solution, followed by a hydrochloric-acid treatment.

The preparation of a raw material iron oxyhydroxide and the treatment of the iron oxyhydroxide with an aqueous base solution may be conducted in the same manner as in preparing the "iron oxyhydroxide-containing adsorbent material A". The iron oxyhydroxide that has been treated with a base is then brought into contact with hydrochloric acid. The concentration of the hydrochloric acid is not limited but is generally about 0.0001 to about 10 mol/l, and preferably about 0.0001 to about 0.01 mol/l. The treating temperature is not limited as long as it falls within the range from about 10 to about 50°C. The treating time is also not limited as long as it falls within the range from about 0.1 to about 2 hours.

In the case of batch type treatment, the above-described base treatment and hydrochloric acid treatment may be conducted by soaking the iron oxyhydroxide in an aqueous base solution at room (ordinary) temperature, followed by hydrochloric acid treatment. In the case of flow type treatment, the treatment may be conducted by placing an iron oxyhydroxide in a column, etc., passing an aqueous base solution into the column at room (ordinary) temperature, and then passing hydrochloric acid in the column.

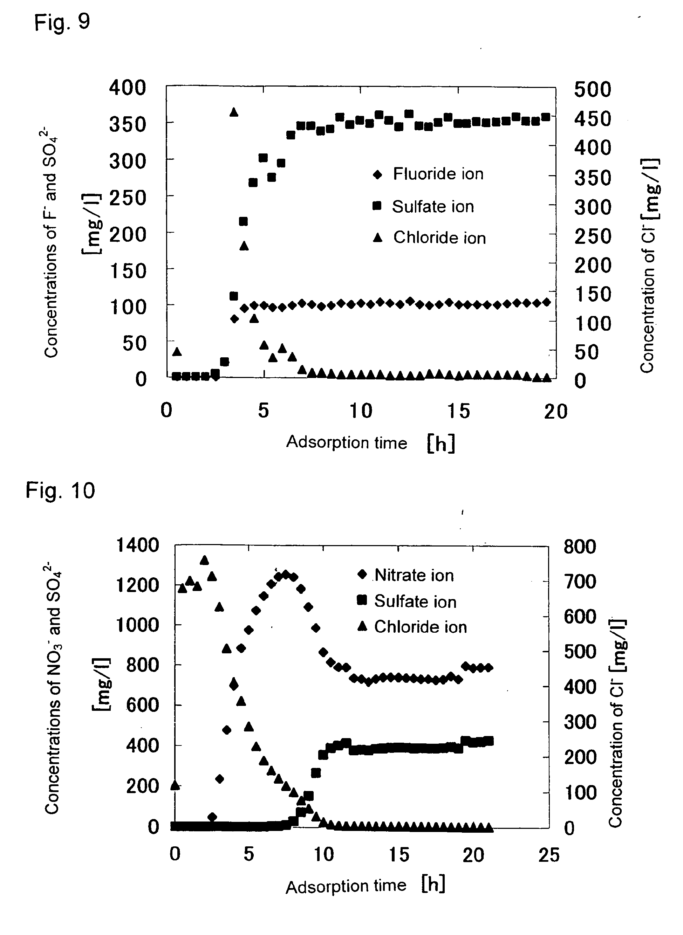

The thus-obtained "iron oxyhydroxide-containing adsorbent material B" exhibits a high adsorption selectivity to phosphate ion, nitrate ion, sulfate ion, fluoride ion and like anion species. Test Example III-2 and Figs. 8 and 9 facilitate an easy understand of the behavior of selective adsorption of these anion species.

### Structures of iron oxyhydroxide-containing adsorbent materials A and B

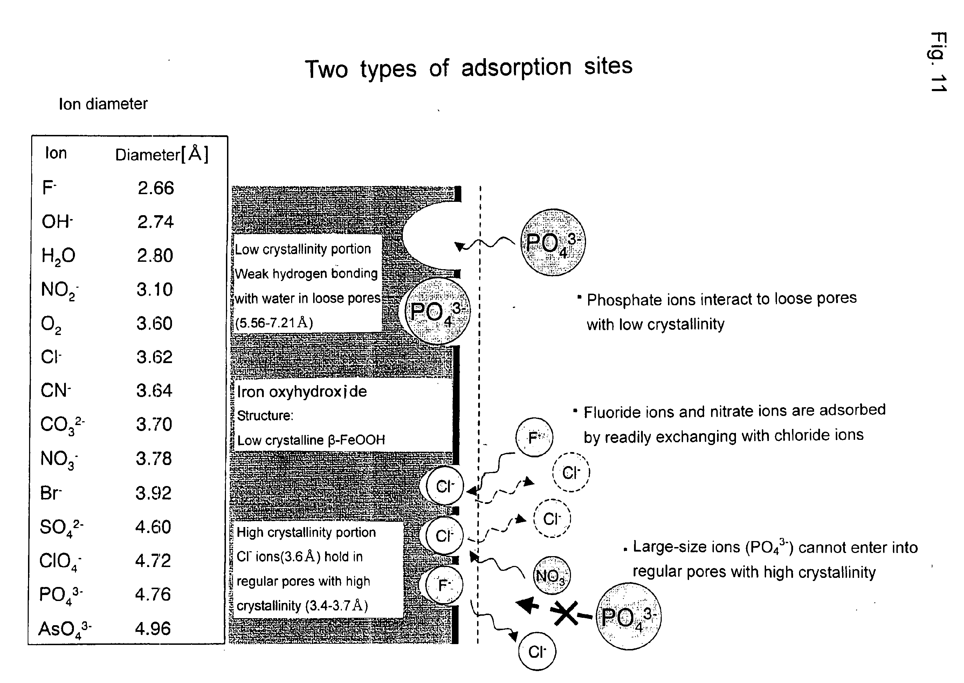

The structure of iron oxyhydroxide is not precisely known; however, it probably has a β-FeOOH structure with a low crystallinity (see Fig. 11). It is believed that two types of vacancies, i.e., low-crystalline vacancy (vacancy size of about 5.56 to about 7.21 Å) and high-crystalline vacancy (vacancy size of about 3.4 to about 3.7 Å), exist in adsorption sites in an iron oxyhydroxide.

It is believed that phosphate ion having a large ion radius is adsorbed in the low-crystalline vacancies.

The high-crystalline vacancy functions as a so-called "tunnel site", which corresponds to the high-crystalline portion (vacancy) shown in Fig. 11 in which chloride ion, fluoride ion, nitrate ion and the like are probably adsorbed. It is believed that, in the "tunnel site", adsorption occurs due to ion exchanging between different anion species.

Because the "iron oxyhydroxide-containing adsorbent material A" was subjected to a water treatment during the production process, only a few anion species would exist in the adsorption sites of low-crystalline vacancies and in those of the high-crystalline vacancies (tunnel sites). The adsorption behavior is probably as below. Phosphate ion, which has a diameter of about 4.76 Å, can be adsorbed in low-crystalline vacancies because it can fit in loose vacancies. However, phosphate ion cannot be adsorbed in high-crystalline vacancies (tunnel sites) because it cannot fit therein. Furthermore, because no chloride ion exists in the high-crystalline vacancies, anion species (nitrate ion, fluoride ion, sulfate ion, etc.) having an ion diameter of not greater than about 3.7 Å cannot conduct ion exchanging in the high-crystalline vacancies, they are hardly adsorbed in high-crystalline vacancies.

In contrast, because the "iron oxyhydroxide-containing adsorbent material B" has been treated with hydrochloric acid in the production process, chloride ion probably exist in the high-crystalline vacancies (tunnel sites) whose radius is similar to that of chloride ion (Cl⁻), but not in the low crystalline vacancies. The adsorption behavior is assumed as below. Phosphate ion, which has a diameter of about 4.76 Å, can be adsorbed in low-crystalline vacancies because it can fit in loose vacancies, but it cannot be adsorbed in high-crystalline vacancies (tunnel sites) because it cannot fit therein. Anion species (nitrate ion, fluoride ion, sulfate ion, etc.) having an ion diameter of not greater than about 3.7 Å are adsorbed in the high-crystalline vacancies by conducting ion exchange with chloride ion.

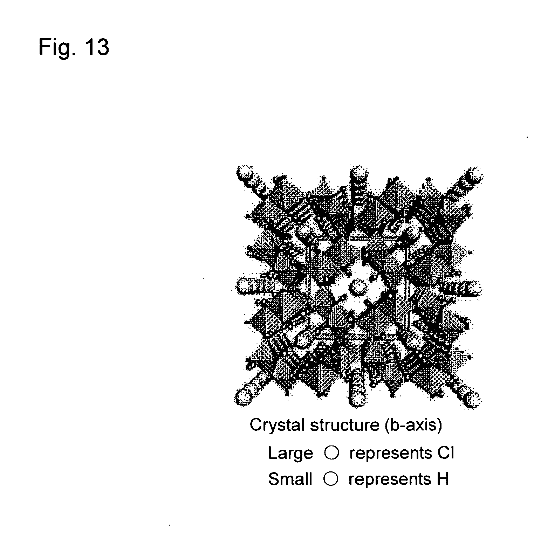

Figure 13 shows a schematic diagram of tunnel sites in the iron oxyhydroxide-containing adsorbent material B. In Fig. 13, a pore with regular shape encompassing a chloride ion is a "tunnel site".

### Separation and recover of phosphate ion and nitrate ion using iron oxyhydroxide-containing adsorbent materials A and B

Phosphate ion and nitrate ion can be effectively and selectively separated and recovered form water that contains phosphate ion and nitrate ion (water to be treated) using the above-described iron oxyhydroxide-containing adsorbent materials A and B.

Specifically, by sequentially contacting the water that contains phosphate ion and nitrate ion with the iron oxyhydroxide-containing adsorbent material A and the iron oxyhydroxide-containing adsorbent material B in this order, phosphate ion is selectively adsorbed in the iron oxyhydroxide-containing adsorbent material A and nitrate ion is selectively adsorbed in the iron oxyhydroxide-containing adsorbent material B, thereby phosphate ion and nitrate ion can be independently separated and recovered.

To be more specific, the water that contains phosphate ion and nitrate ion is sequentially passed through an adsorption column filled with the iron oxyhydroxide-containing adsorbent material A and an adsorption column filled with the iron oxyhydroxide-containing adsorbent material B in this order. Nitrate ion passes through the adsorption column filled with the adsorbent material A without being adsorbed, but almost 100% phosphate ion is selectively adsorbed. The water that contains nitrate ion, which has passed though the first adsorption column, is then introduced into the second adsorption column that is filled with the adsorbent material B, wherein almost 100% nitrate ion is adsorbed by conducting ion exchanging with chlorine ion exists in the vacancies of the iron oxyhydroxide-containing adsorbent material B.

After the above-described treatment, the phosphate ion adsorbed in the adsorption column can be desorbed and recovered by washing with about 0.1 to about 5 mol/l aqueous sodium hydroxide solution, and the subsequent washing with water can make the adsorbent material A reusable.

The nitrate ion adsorbed in the adsorption column can be recovered by washing with about 0.1 to about 5 mol/l aqueous sodium hydroxide solution, and the subsequent washing with about 0.0001 to 10 mol/l hydrochloric acid can make the adsorbent material B reusable.

When a large amount of water is to be treated, a plurality of the above-mentioned adsorption columns filled with the adsorbent material A may be provided in parallel. Likewise, a plurality of the above-mentioned adsorption columns filled with the adsorbent material B may be provided in parallel.

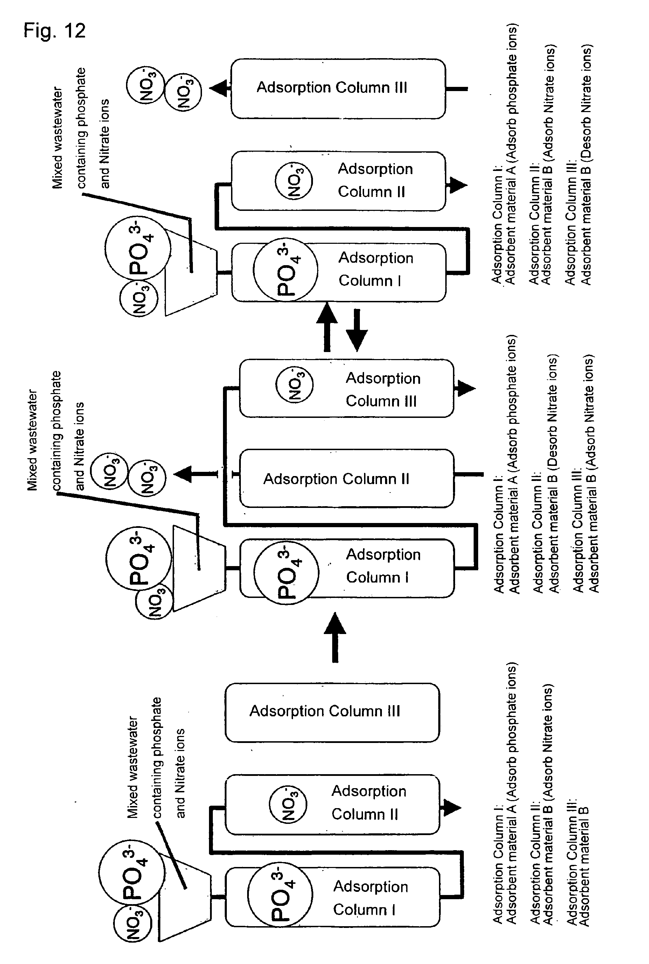

Generally speaking, because the adsorption amount of nitrate ion in the iron oxyhydroxide-containing adsorbent material B is relatively small compare to the adsorption amount of phosphate ion in the iron oxyhydroxide-containing adsorbent material A, and therefore it is preferable that a plurality of adsorption columns filled with the iron oxyhydroxide-containing adsorbent material B be provided as shown in Fig. 12.

Figure 12 shows an apparatus for recovering anion species, more specifically an apparatus that can selectively separate and recover phosphate ion and nitrate ion from water that contains phosphate ion and nitrate ion (i.e., water to be treated). The apparatus comprises adsorption column I in which the iron oxyhydroxide-containing adsorbent material A is placed and adsorption columns II and III in which the iron oxyhydroxide-containing adsorbent material B is placed. The adsorption column I comprises an inlet of the water to be treated and an outlet for discharging the treated water. The adsorption column I is connected to the adsorption columns II and III by a pipe that introduces the water discharged from the outlet of column I to the columns II and III. Each of the adsorption columns II and III comprises an outlet from which treated water is discharged. The pipe is provided with a valve (not shown) that can switch the flow of the treated water discharged from the adsorption column I to the adsorption column II or III.

The specific operation using the above-mentioned apparatus is described below. For example, water that contains phosphate ion and nitrate ion (water to be treated) is first passed through the adsorption column I to adsorb phosphate ion, the treated water is then supplied to the adsorption column II to adsorb nitrate ion. After a predetermined time period, the valve is switched from the adsorption column II to the adsorption column III so as to introduce the water into the adsorption column III, thereby adsorbing nitrate ion. At this time, the nitrate ion- containing adsorption column II is subjected to a treatment of desorbing nitrate ion. Such desorption treatment is conducted in such a manner that about 0.1 to about 5 mol/l aqueous sodium hydroxide solution is introduced from the outlet of the adsorption column II so that the adsorbed component (nitrate ion) is desorbed and recovered. About 0.0001 to about 10 mol/l hydrochloric acid is then introduced therein so as to make the adsorbent material B reusable.

After a predetermined time period, the valve is switched again from the adsorption column III to the adsorption column II so as to introduce the treated water into the adsorption column II to adsorb nitrate ion. At this time, the nitrate ion- containing adsorption column III is subjected to a treatment of desorbing nitrate ion. The desorption treatment is conducted in the same manner as that conducted in the adsorption column II.

Desorption of phosphate ion from the adsorption column I is conducted by stopping the operation of the adsorption column I, and then introducing about 0.1 to about 5 mol/l aqueous sodium hydroxide solution from the outlet of the adsorption column I so as to recover the adsorbed component (phosphate ion).

By repeating such operation, phosphate ion and nitrate ion can be effectively separated and recovered.

The above-mentioned apparatus shown in Fig. 12 and the operation using the apparatus is just one example of many possibilities and the number of the adsorption column holding the iron oxyhydroxide-containing adsorbent material A (i.e., adsorption column I) is not limited to one and a plurality of adsorption columns may be arranged in parallel. Likewise, the number of the adsorption columns holding the iron oxyhydroxide-containing adsorbent material B is not limited two, i.e., the adsorption columns II and III, and three or more adsorption columns may be provided. This makes it possible to adsorb phosphate ion and nitrate ion without stopping the flow of the water to be treated.

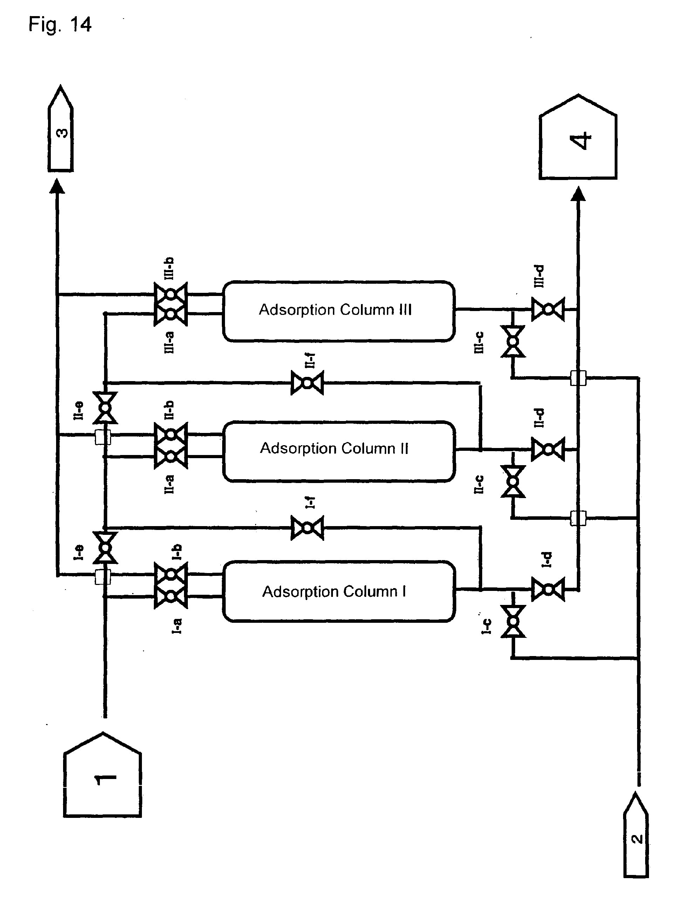

The specific operation is illustrated in Example III-3 and Figs. 14 to 17.

Note that, in the third embodiment, the same effects can be obtained even if the iron oxyhydroxide obtained in the "first embodiment" or the "second embodiment" is used instead of the "iron oxyhydroxide-containing adsorbent material B".

### [Effect of the Invention]

The production method of the first embodiment enables to efficiently produce an iron oxyhydroxide exhibiting excellent adsorbability to phosphorus components, endocrine disrupting chemicals and like toxic substances.

The iron oxyhydroxide obtained by the method of the first embodiment has a large specific surface area of 100 to 450 m²/g and a great pore size distribution (dV/dR) of 100 to 300 mm³/g/nm, and therefore it exhibits excellent adsorptive power to various toxic substances including phosphate ion and like anion species.

Furthermore, because the pore radius can be controlled so that its radius peak falls within the range from 0.8 to 3 nm and the range of pore size distribution 7 nm or less, the targeted ion species can be selectively adsorbed by making the pore radius suitable for the radius of the ion species to be adsorbed. This renders the iron oxyhydroxide to function similar to those of molecular sieves.

The adsorbent material of the first embodiment is easily reusable and therefore is highly practicable, wherein the targeted elements in anion species can be effectively recovered the adsorbed anion species by desorption.

The production method of the second embodiment makes it possible to efficiently produce an iron oxyhydroxide exhibiting excellent adsorbability to phosphorus components, endocrine disrupting chemicals and like toxic substances.

The iron oxyhydroxide obtained in the method of the second embodiment has a large median aggregate diameter of 0.3 to 4.0 mm, and therefore it is easily handled and its pore size can be readily controlled by pulverization, etc. The iron oxyhydroxide obtained in the method of the second embodiment further has a large specific surface area measured by a BET method of 100 to 450 m²/g, and the large pore size distribution (dV/dR) measured by the BJH method (Barrett-Joyner-Halenda Method) of 100 to 300 mm³/g/nm, and therefore it exhibits excellent adsorptive power to various toxic substances including phosphate ion and like anion species.

Furthermore, because the pore radius can be controlled so that its radius peak falls within the range from 0.8 to 3 nm and the range of pore size distribution 7 nm or less, the targeted ion species can be selectively adsorbed by making the pore radius optimum for the radius of ion species to be adsorbed. This imparts the pores to have the functions similar to those of molecular sieves.

The adsorbent material of the second embodiment is an energy-saving type adsorbent material whose pore size can be controlled even at a low temperature. The adsorbent material is easily reusable and therefore is highly practicable, wherein the elements in anion species can be effectively recovered the adsorbed anion species by desorption.

The "iron oxyhydroxide-containing adsorbent material A" of the third embodiment exhibits high adsorption selectivity to phosphate ion. This allows to effectively and selectively recover phosphate ion using the adsorbent material A.

By using the "iron oxyhydroxide-containing adsorbent material A" and the "iron oxyhydroxide-containing adsorbent material B" in a combined manner, phosphate ion and nitrate ion can be effectively and selectively separated and recovered from water that contains phosphate ion and nitrate ion (water to be treated).

### BRIEF DESCRIPTION OF THE DRAWINGS

Figure 1 is a graph showing the pore size distribution of the iron oxyhydroxides obtained in Examples I-1 to I-4 and Comparative Example I-3.
Figure 2 is a graph showing the pore size distribution of the iron oxyhydroxides obtained in Examples I-3 and I-5 to I-7.
Figure 3 is a graph showing the particle size distribution of the iron oxyhydroxides obtained in Examples II-1 and II-3.
Figure 4 is a graph showing the pore size distribution of the iron oxyhydroxides obtained in Examples II-1 to II-3.
Figure 5 is a graph showing the pore size distribution of the iron oxyhydroxides obtained in Examples II-4 to II-6.
Figure 6 is a graph showing the changes over time of the concentrations of ion species in the discharged water, when water that contains phosphate ion and nitrate ion is treated with the iron oxyhydroxide-containing adsorbent material A.
Figure 7 is a graph showing the changes over time of the concentrations of ion species in the discharged water, when water that contains phosphate ion and nitrate ion is treated with the iron oxyhydroxide-containing adsorbent material B.
Figure 8 is a graph showing the changes over time of the concentrations of ion species in the discharged water, when water that contains fluoride ion and nitrate ion is treated with the iron oxyhydroxide-containing adsorbent material B.
Figure 9 is a graph showing the changes over time of the concentrations of ion species in the discharged water, when water that contains fluoride ion and sulfate ion is treated with the iron oxyhydroxide-containing adsorbent material B.
Figure 10 is a graph showing the changes over time of the concentrations of ion species in the discharged water, when water that contains nitrate ion and sulfate ion is treated with the iron oxyhydroxide-containing adsorbent material B.
Figure 11 schematically illustrates the assumed structure of the iron oxyhydroxide and the adsorption behaviors of various anion species to the iron oxyhydroxide.
Figure 12 schematically illustrates an apparatus for separating and recovering phosphate ion and nitrate ion from water that contains phosphate ion and nitrate ion.
Figure 13 schematically illustrates tunnel sites in the iron oxyhydroxide-containing adsorbent material B.
Figure 14 schematically illustrates an apparatus for separating and recovering phosphate ion and nitrate ion from water that contains phosphate ion and nitrate ion.
Figure 15 illustrates the first treatment operation using the apparatus of Fig. 14.
Figure 16 illustrates the second treatment operation using the apparatus of Fig. 14.
Figure 17 illustrates the third treatment operation using the apparatus of Fig. 14.

### [Explanation of reference numerals]

1: Tank for accommodating water to be treated (water that contains phosphate ion and nitrate ion)
2: Aqueous sodium hydroxide solution tank
3: Nitrate ion recovery tank
4: Tank for treated water
I-a to I-f, II-a to II-f and III-a to III-d: Valves

### BEST MODE FOR CARRYING OUT THE INVENTION

The present invention including the first to third embodiments is explained in detail with reference to Examples, but the scope of the present invention is not limited to these Examples.

### I. First Embodiment

### Example I-1

Iron (III) chloride (FeCl₃ · 6H₂O) was dissolved in water in such a manner that the concentration became 0.1 mol/l. To the resultant solution was added 2 mol/l aqueous NaOH solution while stirring at room temperature so that the solution had a pH of 4. The precipitation product generated in the solution was allowed to stand for 24 hours, followed by suction filtration, a precipitate was thereby obtained. The thus-obtained precipitate was dried at 50°C for 48 hours in an oven, obtaining FeOOH.

The thus-obtained FeOOH has the BET specific surface area of 50.6 m²/g, and the average particle diameter as aggregates of 200 µm. The resultant iron oxyhydroxide was placed in purified water in such a manner that its pulp concentration (weight percentage of dried iron oxyhydroxide in water) became 5%, followed by stirring the mixture at room temperature for 5 minutes. After the stirring, the resultant mixture was subjected to suction filtration, obtaining an iron oxyhydroxide. The resultant iron oxyhydroxide was dried at 55°C for 24 hours. After drying, the iron oxyhydroxide was subjected to a heat treatment under an atmosphere having a nitrogen concentration of 99% or greater at 200°C for one hour so as to suitably control the pore radius. The resultant iron oxyhydroxide had the BET specific surface area of 260.19 m²/g, pore size distribution (dV/dR) of 194.34 mm³/g/nm, pore radius peak of 1.28 nm, range of pore radius of not greater than 2.5 nm, and the average particle diameter of aggregates of 150 µm.

The measurement conditions are as below:
(1) BET specific surface area
   The BET specific surface area was measured using a BET specific surface area measurement apparatus (product name: BELSORP-mini, product of Bel Japan, Inc.).
(2) Pore size distribution (dV/dR), pore radius peak, and range of pore radius distribution
   The pore size distribution (dV/dR), the pore radius peak, and the range of pore radius distribution were calculated based on the BJH method using the measurement results obtained by using a BET specific surface area measurement apparatus (product name: BELSORP-mini, product of Bel Japan, Inc.).
(3) Average particle diameter

The median particle diameter was calculated from the particle size distribution on volume basis measured using a laser diffraction/scattering particle size distribution analyzer (for example, LA-920, product of Horiba Ltd.).

### Examples I-2 to I-7

Iron oxyhydroxides of Examples I-2 to I-7 were obtained in the same manner as in Example I-1 except that the drying temperature and drying time in Step (I-d) were changed to those shown in Table 1. The physical properties thereof are shown in Table 1.

### Comparative Examples I-1 and I-2

Using a commercially-available iron oxyhydroxide (α-FeOOH, product of Nacalai Tesque, Inc., BET specific surface area of 10.8 m²/g), heat treatments were conducted under the conditions shown in Table 1. The physical properties of the obtained iron oxyhydroxides are shown in Table 1.

### Comparative Example I-3

An iron oxyhydroxide was obtained in the same manner as in Example I-1 except that the drying temperature in Step (I-d) was changed to 300°C. The physical properties of the obtained iron oxyhydroxide are shown in Table 1.

### Comparative Examples I-4 and I-5

Iron oxides (Fe₂O₃) were obtained in the same manner as in Example I-1 except that the drying of Step (I-d) was conducted at 200°C or 250°C under air instead of an atmosphere having the nitrogen concentration of 99% or greater. The physical properties of the obtained iron oxides are shown in Table 1.

**Table 1**

| | Atmosphere | Temperature (°C) | Time (hr) | BET specific surface area (m²/g) | Pore size distribution (mm³/g/nm) | Pore radius | | Adsorption (%) |
|---|---|---|---|---|---|---|---|---|
| | | | | | | Peak (nm) | Distribution Range (nm) | |
| Ex. I-1 | Nitrogen | 140 | 1 | 254.62 | 125.3 | 0.83 | 2.5 | 58.1 |
| Ex. I-2 | Nitrogen | 170 | 1 | 260.77 | 155.2 | 0.83 | 2.5 | 60.4 |
| Ex. I-3 | Nitrogen | 200 | 1 | 260.19 | 194.3 | 1.28 | 2.5 | 57.8 |
| Ex. I-4 | Nitrogen | 250 | 0.5 | 200.41 | 208.7 | 2.25 | 3.5 | 38.9 |
| Ex. I-5 | Nitrogen | 200 | 2 | 260.83 | 189.1 | 1.28 | 2.5 | 56.3 |
| Ex. I-6 | Nitrogen | 200 | 4 | 225.64 | 188.6 | 1.52 | 2.5 | 55.4 |
| Ex. I-7 | Nitrogen | 200 | 8 | 216.65 | 192.5 | 1.70 | 2.5 | 54.8 |
| Comp. Ex. I-1 | Nitrogen | 150 | 1 | 16.17 | 87.8 | 0.95 | - | 3.0 |
| Comp. Ex. I-2 | Nitrogen | 200 | 1 | 17.49 | 75.3 | 0.83 | - | 3.5 |
| Comp. Ex. I-3 | Nitrogen | 300 | 1 | 35.11 | 242.9 | 21.19 | - | 7.7 |
| Comp. Ex. I-4 | Air | 200 | 1 | 145.78 | 183.9 | 2.04 | 4 | 0 |
| Comp. Ex. I-5 | Air | 250 | 1 | 21.98 | 215.8 | 41.85 | - | 0 |

### (Evaluation of adsorption ability of iron oxyhydroxide to phosphorus)

Each of the iron oxyhydroxides obtained in Examples I-1 to I-4 and Comparative Example I-3 and iron oxides obtained in Comparative Examples I-4 and I-5 was added to an aqueous phosphoric acid solution of 50 mg/l in terms of phosphorus in such a manner that its concentration became 1 g/l, and the phosphorus removal rates were calculated from the phosphorus concentrations of 12 hours latter. Table 1 shows the results.

### (Pore size distribution of iron oxyhydroxide)

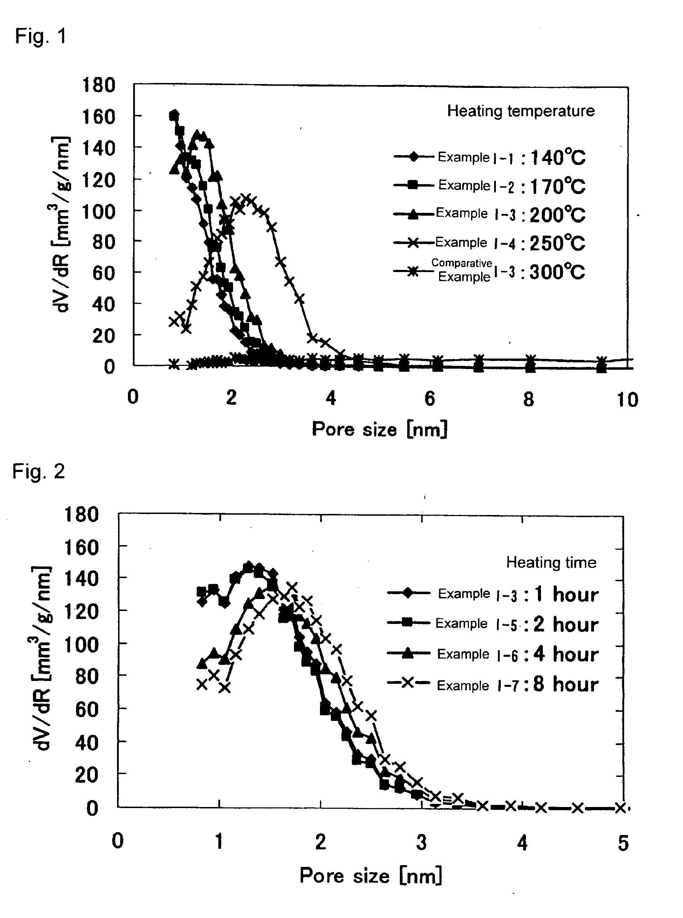

Figure 1 is a graph showing the pore size distributions of the iron oxyhydroxides obtained in Examples I-1 to I-4 and Comparative Example I-3. Table 1 shows that the pore size distribution in the porous iron oxyhydroxide of the present invention can be controlled by heating under a nitrogen atmosphere.

Figure 2 is a graph showing the pore size distributions of the iron oxyhydroxides obtained in Examples I-3 and I-5 to 1-7. By changing the heating time, the pore size distribution can be made more uniform.

As described above, the present invention allows the iron oxyhydroxide to have a BET specific surface area, pore size distribution (dV/dR), pore radius peak, range of pore radius distribution, average particle diameter, etc., suitable for capturing the toxic substances to be removed.

### II. Second Embodiment

### Example II-1

Iron (III) chloride (FeCl₃· 6H₂O) was dissolved in water in such a manner that the concentration became 0.1 mol/l. To the resultant solution was added 2 mol/l aqueous NaOH solution while stirring at room temperature so that the solution had a pH of 4. The precipitation product generated in the solution was allowed to stand for 24 hours, followed by suction filtration, a precipitate was thereby obtained. The thus-obtained precipitate was dried at 50°C for 48 hours in a thermostatic oven under 100% carbon dioxide atmosphere, obtaining FeOOH.

The resultant iron oxyhydroxide was placed in purified water in such a manner that its pulp concentration (weight percentage of dried iron oxyhydroxide in water) became 5%, followed by stirring at room temperature for 5 minutes. After the stirring, the resultant mixture was subjected to suction filtration, obtaining an iron oxyhydroxide. The resultant iron oxyhydroxide was dried at 55°C for 24 hours. After drying, the iron oxyhydroxide was subjected to a heat treatment at 160°C under an atmosphere having a nitrogen concentration of 99% or greater for one hour so as to desirably control the pore radius. The resultant iron oxyhydroxide had the BET specific surface area of 262.7 m²/g, median particle diameter of aggregates (D50: 50% accumulation measured by the below-described dry sieving) of 0.9 mm, the pore size distribution (dV/dR) of 199.9 mm³/g/nm, pore radius peak of 1.52 nm, and the range of pore radius distribution of not greater than 3.5 nm.

The measurement conditions are as below:
(1) BET specific surface area
   The BET specific surface area was measured using a BET specific surface area measurement apparatus (product name: BELSORP-mini, product of Bel Japan, Inc.).
(2) Pore size distribution (dV/dR), pore radius peak, and range of pore radius distribution
   The pore size distribution (dV/dR), the pore radius peak, and the range of pore radius distribution were obtained by the BJH method based on the measurement results obtained by using a BET specific surface area measurement apparatus (product name: BELSORP-mini, product of Bel Japan, Inc.).
(3) Median particle diameter of aggregates of iron oxyhydroxide

The median particle diameter of iron oxyhydroxide aggregates was measured by a dry sieving method using a ro-tap sieve shaker.

### Examples II-2 to II-6

Iron oxyhydroxides of Examples II-2 to II-6 were obtained in the same manner as in Example II-1 except that the drying temperature and drying time in Step (II-d) were changed to those shown in Table 2. The physical properties thereof are shown in Table 1.

### Example 11-7

An iron oxyhydroxide was obtained in the same manner as in Example II-5 except that Step (II-b) was conducted under a nitrogen 100% atmosphere. Table 2 shows the physical properties of the obtained iron oxyhydroxide.

### Comparative Example II-1

An iron oxyhydroxide was obtained in the same manner as in Example II-1 except that Step (II-b) was omitted and Step (II-d) was conducted under the conditions shown in Table 2. Table 2 shows the physical properties of the obtained iron oxyhydroxide.

### Comparative Example II-2

An iron oxyhydroxide was obtained in the same manner as in Example II-1 except that Step (II-b) was conducted under an air atmosphere and Step (II-d) was conducted under the conditions shown in Table 2. Table 2 shows the physical properties of the obtained iron oxyhydroxide.

### Comparative Example II-3

An iron oxyhydroxide was obtained in the same manner as in Example II-1 except that Step (II-b) was conducted under an air atmosphere and Step (II-d) was omitted. Table 2 shows the physical properties of the obtained iron oxyhydroxide.

### Comparative Example II-4

An iron oxide (Fe₂O₃) was obtained in the same manner as in Example II-1 except that Step (II-b) was conducted under an air atmosphere at 200°C and Step (II-d) was omitted. Table 2 shows the physical properties of the obtained iron oxyhydroxide.

### Comparative Example II-5

An iron oxide (Fe₂O₃) was obtained in the same manner as in Example II-1 except that Step (II-b) was conducted under a nitrogen atmosphere at 200°C and Step (II-d) was omitted. Table 2 shows the physical properties of the obtained iron oxyhydroxide.

**Table 2**

| | Step (II-b) | | Step (II-d) | | | Evaluation results | | | | | |
|---|---|---|---|---|---|---|---|---|---|---|---|
| | Atmosphere | Temperature (°C) | Atmosphere | Temperature (°C) | Time (hr) | BET specific surface area (m²/g) | Pore size distribution (mm³/g/nm) | Pore radius | | Adsorption (%) | Median diameter of aggregates (mm) |
| | | | | | | | | Peak (nm) | Distribution range (nm) | | |
| Ex. II-1 | CO₂ | 50 | N₂ | 160 | 1 | 262.7 | 199.9 | 1.52 | Not greater than 3.5 | 74.5 | 0.9 |
| Ex. II-2 | CO₂ | 50 | N₂ | 130 | 1 | 255.3 | 160.6 | 0.83 | Not greater than 3.5 | 71.8 | 0.9 |
| Ex. II-3 | CO₂ | 50 | N₂ | 70 | 1 | 240.2 | 141.6 | 0.83 | Not greater than 3.5 | 68.8 | 0.9 |
| Ex. II-4 | CO₂ | 50 | N₂ | 160 | 2 | 253.3 | 177.9 | 1.28 | Not greater than 3.5 | 75.7 | 1.0 |
| Ex. II-5 | CO₂ | 50 | N₂ | 160 | 4 | 262.8 | 197.9 | 1.39 | Not greater than 3.5 | 77.2 | 0.9 |
| Ex. II-6 | CO₂ | 50 | N₂ | 160 | 24 | 289.8 | 233.8 | 1.52 | Not greater than 3.5 | 81.7 | 0.9 |
| Ex. II-7 | N₂ | 50 | N₂ | 160 | 2 | 264.5 | 198.8 | 1.52 | Not greater than 3.5 | 74.2 | 0.9 |
| comp. Ex. II-1 | - | - | N₂ | 1 60 | 1 | 150.4 | - | - | - | 40.1 | - |
| Comp. Ex. II-2 | Air | 50 | N₂ | 140 | 1 | 254.6 | 125.3 | 0.83 | Not greater than 3.5 | 58.1 | 0.2 |
| Comp. Ex. II-3 | Air | 50 | - | - | - | 218.6 | 121.5 | 0.83 | Not greater than 3.5 | 45.0 | 0.2 |
| Comp. Ex. II-4 | Air | 200 | - | - | - | 20.5 | - | - | - | 0 | - |
| Comp. Ex. II-5 | N₂ | 200 | - | - | - | 32.1 | - | - | - | 0 | - |

### (Evaluation of adsorption ability of iron oxyhydroxide to phosphorus)

Each of the iron oxyhydroxides obtained in Examples II-1 to II-7 and Comparative Examples II-1 to II-3 was added to an aqueous phosphoric acid solution of 50 mg/l in terms of phosphorus in such a manner that its concentration became 1 g/l, and the phosphorus removal rates were calculated based on the phosphorus concentrations of 12 hours latter. Table 2 shows the results.

As is clear from Table 2, the iron oxyhydroxides obtained in Examples had phosphorus removal rates of 65% or greater but those obtained in Comparative Examples had phosphorus removal rates of 65% or less.

### (Pore size distribution in iron oxyhydroxide)

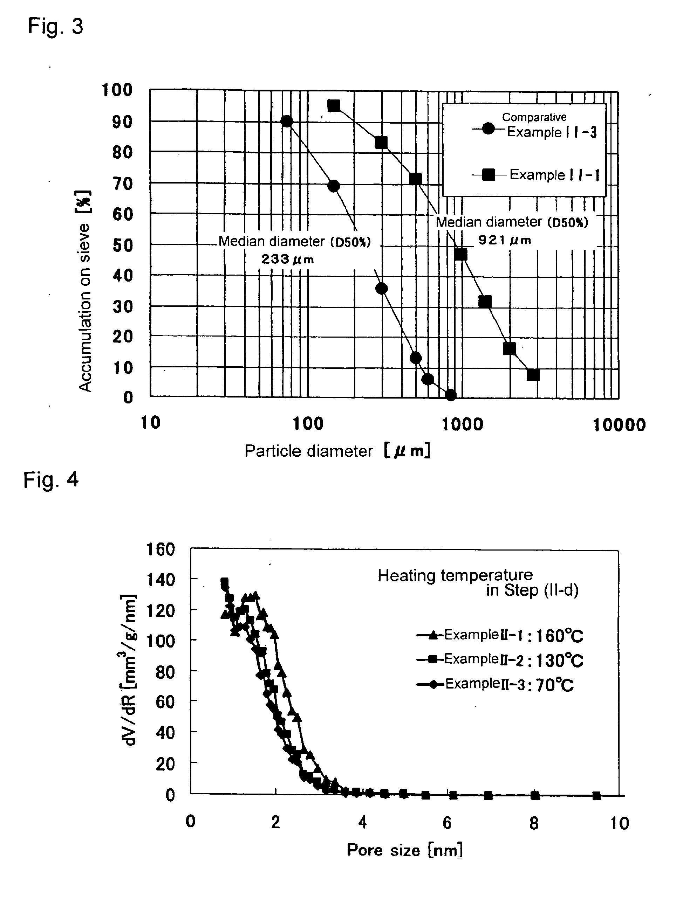

Figure 3 is a graph showing the pore size distributions of the iron oxyhydroxides obtained in Example II-1 and Comparative Example II-3. As is clear from the graph, when Step (II-b) was conducted under a carbon dioxide atmosphere, the median diameter of iron oxyhydroxide aggregates increases to about 4 times of that conducted under an air atmosphere.

Figure 4 is a graph showing the pore size distributions of the iron oxyhydroxides obtained in Examples II-1 to II-3. Figure 4 shows that the pore size distribution of the porous iron oxyhydroxide of the present invention can be controlled by heating under a nitrogen atmosphere.

Figure 5 is a graph showing the pore size distributions of the iron oxyhydroxides obtained in Examples II-4 to II-6. By changing the heating time, the range of the pore size distribution can be made more uniform.

As described above, the present invention allows the iron oxyhydroxide to have a BET specific surface area, pore size distribution (dV/dR), pore radius peak, range of pore radius distribution, average particle diameter, etc., suitable for capturing the toxic substances to be removed.

### (Evaluation of adsorption ability of iron oxyhydroxide to nitrate ion)

An adsorption experiment of nitrate ion (NO₃⁻) was conducted using an iron oxyhydroxide obtained in Example II-1 under the conditions described below. As a result, almost 100% nitrate ion was removed.
(1) Conditions:
   Amount of iron oxyhydroxide used: 11 g
   Simulated wastewater having a nitrate ion (NO₃⁻) concentration of 88 ppm
   Column used: inside diameter of 10 mm, length of 100 mm, capacity of 7.9 ml
   Room (ordinary) temperature, space velocity of 38h⁻¹, flow rate of 5 ml/minute
(2) Conditions:
   Amount of iron oxyhydroxide used: 23 g
   The water in Lake Biwa (Seta area), nitrate ion (NO₃⁻) concentration of 6 mg/l
   Column used: inside diameter of 10 mm, length of 200 mm, capacity of 15.7 ml
   Room (ordinary) temperature, space velocity 19h⁻¹, flow rate of 5 ml/minute

### (Evaluation of adsorption ability of iron oxyhydroxide to fluoride ion)

An adsorption experiment of fluoride ion was conducted using an iron oxyhydroxide obtained in Example II-1 under the conditions described below. As a result, almost 100% fluoride ion was removed.
(3) Conditions:
   Amount of iron oxyhydroxide used: 23 g
   Electronic industry wastewater, fluoride ion concentration of 107 mg/l
   Column used: inside diameter of 10 mm, length of 200 mm, capacity of 15.7 ml
   Room (ordinary) temperatures, space velocity 19h⁻¹, flow rate of 5 ml/minute

### III. Third Embodiment

The "iron oxyhydroxide-containing adsorbent material A" and the "iron oxyhydroxide-containing adsorbent material B" were prepared in the following manners and their adsorptivities to specific anion species were evaluated.

### Example III-1 (iron oxyhydroxide-containing adsorbent material A)

Iron oxyhydroxide-containing adsorbent material A was obtained in the following manner. Iron (III) chloride 6-hydrate was added and dissolved into 8 liters of purified water agitated using an agitation impeller in such a manner that the concentration thereof became 0.1 mol/l. Subsequently, 4 mol/l sodium hydroxide solution was added dropwise to the resultant iron (III) chloride solution under agitation at a flow rate of 2 ml/minute using a peristaltic pump, and then adjusted its pH to 5 using a pH controller, giving a gel iron oxyhydroxide. The agitation was stopped after the adjustment of pH, the resultant gel was allowed to stand still for 24 hours and then subjected to filtration. The gelated iron oxyhydroxide that had been allowed to stand still was subjected to suction filtration using a Buchner funnel with a 5C filter paper, and then dried. The gelated iron oxyhydroxide that had been dehydrated by filtration was placed in a thermostatic oven together with the filtration paper, and dried at 50°C for 24 hours to 72 hours.

The thus-obtained dried black iron oxyhydroxide was subjected to sieving, 23 g of 0.5 to 1.7 mm of iron oxyhydroxide was placed in a column, 500 ml of 2.5 mol/l aqueous NaOH solution was then passed through the column at a flow rate of 5 ml/minute. After passing the aqueous NaOH solution, 4 litters of purified water was supplied to the column at a flow rate of 5 ml/minute, obtaining the iron oxyhydroxide-containing adsorbent material A.

### Example III-2 (iron oxyhydroxide-containing adsorbent material B)

Iron oxyhydroxide-containing adsorbent material B was obtained in the following manner. Iron (III) chloride 6-hydrate was added and dissolved into 8 liters of purified water agitated using an agitation impeller in such a manner that the concentration thereof became 0.1 mol/l. Subsequently, 4 mol/l sodium hydroxide solution was added dropwise to the resultant iron (III) chloride solution under agitation at a flow rate of 2 ml/minute using a peristaltic pump, and then adjusted its pH to 5 using a pH controller, giving a gel iron oxyhydroxide. The agitation was stopped after the adjustment of pH, the resultant gel was allowed to stand still for 24 hours and then subjected to filtration. The gelated iron oxyhydroxide that had been allowed to stand still was subjected to suction filtration with placing a 5C filter paper in a Buchner funnel, and then dried. The gelated iron oxyhydroxide that had been dehydrated by filtration was placed in a thermostatic oven together with the filtration paper, and dried at 50°C for 24 hours to 72 hours.

The thus-obtained dried black iron oxyhydroxide was subjected to sieving, 23 g of 0.5 to 1.7 mm of iron oxyhydroxide was placed in a column, 500 ml of 2.5 mol/l aqueous NaOH solution was then passed through the column at a flow rate of 5 ml/minute. After completion of passing the aqueous NaOH solution, an aqueous solution obtained by adding 2 ml of 30% to 37% (9 to 12 mol/l) hydrochloric acid to 2 liters of purified water (i.e., the hydrochloric acid concentration of about 0.0001 to about 0.01 mol/l was passed through the column at a flow rate of 5 ml/min, obtaining iron oxyhydroxide-containing adsorbent material B.

### Test Example III-1

Using the "iron oxyhydroxide-containing adsorbent material A (water treatment)" obtained in Example III-1 and the "oxy iron hydroxide adsorbent material B (hydrochloric acid-treatment)" obtained in Example III-2, the following continuous adsorption experiments.

An double plunger pump with medium flow rate range, a column (1/2 inch SUS tube having the length of 200 mm and the inside diameter of 10 mm with a column end joint for connecting with a stainless steel tube of 1/16 inch in an outer diameter), a fraction collector, and stainless steel tube of 1/16 inch in an outer diameter were used as experimental apparatuses.

The experiments were conducted in the following manner using the above-mentioned experimental apparatuses. A solution containing each of the ion species was supplied using the double plunger pump with medium flow rate range (product name: LC-6AD, manufactured by Shimadzu Corporation) at a predetermined flow rate and passed through a column filled with iron oxyhydroxide. Samples for quantitative analysis were collected at predetermined times using a fraction collector (product name: CHF122SB, manufactured by Advantec Toyo Kaisha, Ltd.). The quantitative analysis was conducted using an inductively coupled plasma atomic emission spectroscopy (product name: ICPS-7000 ver.2, product of Shimadzu Corporation) and a suppressor-type ion chromatograph (there is no model number as this is an assembly of several products manufactured by Shimadzu Corporation).

### (1) Iron oxyhydroxide-containing adsorbent material A (water treatment)

Using the iron oxyhydroxide-containing adsorbent material A, experiments evaluating adsorption to a solution containing both phosphate ion and nitrate ion were conducted. Figure 6 shows the changes over time in concentrations of the phosphate ion, nitrate ion, and chloride ion discharged over the adsorption operation.

In the adsorbent material A, few chloride ions existed in the tunnel sites of an iron oxyhydroxide, and adsorption of nitrate ion, which conduct ion exchange with chloride ion, was not observed. Phosphate ion was adsorbed regardless of the presence or absence of chloride ion in the tunnel sites, and almost 100% phosphate ion was adsorbed before 110 hours passed from the initiation of the adsorbing operation.

### [Experimental conditions]

Amount of iron oxyhydroxide-containing adsorbent material A used: 23 g
The particle diameter of iron oxyhydroxide-containing adsorbent material A: 0.5 to 1.7 mm
Column used: inside diameter 10 mm, length of 200 mm
Capacity: 15.7 ml
Room (ordinary) temperature
Flow rate: 1 ml/min
Space velocity SV (1/h): 3.8
Components in wastewater (initial concentration):
phosphate ion 54.28 mg/l
nitrate ion 46.90 mg/l

### (2) Iron oxyhydroxide containing adsorbent material B (hydrochloric acid treatment)

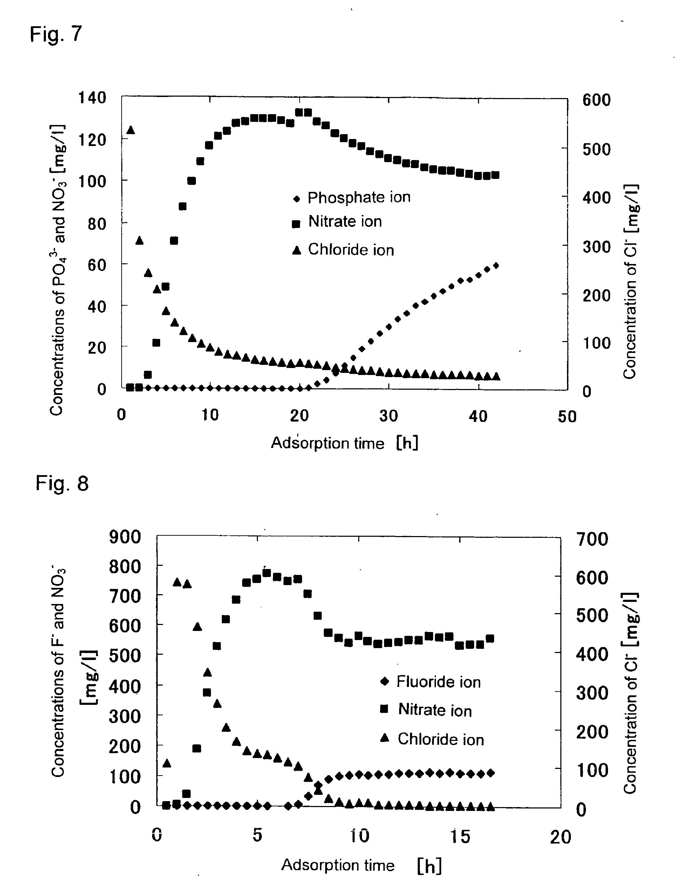

Using the iron oxyhydroxide-containing adsorbent material B, experiments evaluating adsorption to a solution containing both phosphate ion and nitrate ion were conducted. Figure 7 shows the changes over time of concentrations of phosphate ion, nitrate ion, and chloride ion discharged over the adsorption operation.

In the first 3 hours of the adsorption operation conducted using the adsorbent material B, nitrate ion was adsorbed and, at the same time, the concentration of chloride ion was rapidly increased and chloride ion was discharged. This indicates that nitrate ion was adsorbed by conducting ion exchange (substitution) with chloride ion in the tunnel sites. Adsorption of phosphate ion was observed until 23 hours from the initiation of the adsorption regardless of the behavior of chloride ion.

### [Experimental conditions]

Amount of iron oxyhydroxide-containing adsorbent material B used: 23 g
The particle diameter of iron oxyhydroxide-containing adsorbent material B: 0.5 to 1.7 mm
Column used: inside diameter 10 mm, length of 200 mm
Capacity: 15.7 ml
Room (ordinary) temperature
Flow rate: 2 ml/min
Space velocity SV (1/h): 7.6
Components in wastewater (initial concentration):
phosphate ion of 137.44 mg/l
nitrate ion of 95.00 mg/l

### Test Example III-2

Continuous adsorption experiments to binary systems were conducted under the following conditions.

An double plunger pump with medium flow rate range, a column (1/2 inch SUS tube having a length of 200 mm and an inside diameter of 10 mm with a column end joint for connecting with a stainless steel tube of 1/16 inch in an outer diameter), a fraction collector, and a 1/16 inch SUS tube were used as experimental apparatuses.

The experiments were conducted in the following manner using the above-mentioned experimental apparatuses. A solution containing each of the ion species was supplied using the double plunger pump with medium flow rate range (product name: LC-6AD, manufactured by Shimadzu Corporation) at a predetermined flow rate and passed through a column filled with 23 g of the iron oxyhydroxide A. Samples for quantitative analysis were collected at predetermined times using a fraction collector (product name: CHF122SB, manufactured by Advantec Toyo Kaisha, Ltd.). The quantitative analysis was conducted using an inductively coupled plasma atomic emission spectroscopy (product name: ICPS-7000 ver.2, product of Shimadzu Corporation) and a suppressor-type ion chromatograph (there is no model number as this is an assembly of several products manufactured by Shimadzu Corporation).

### [Common experimental conditions]

Amount of iron oxyhydroxide-containing adsorbent material B used: 23 g
The particle diameter of iron oxyhydroxide-containing adsorbent material B: 0.5 to 1.7 mm
Column used: inside diameter of 10 mm, length of 200 mm
Capacity: 15.7 ml
Room (ordinary) temperature
Flow rate: 5 ml/min
Space velocity SV (1/h): 19

### (1) Mixture solution of F⁻ and NO₃⁻

Using the iron oxyhydroxide-containing adsorbent material B, an adsorption experiment was conducted to a solution containing both fluoride ion and nitrate ion. Figure 8 shows the results. Figure 8 shows the changes over time of concentrations of fluoride ion, nitrate ion and chloride ion discharged over the adsorption operation. In the experiment, nitrate ion was adsorbed and, at the same time, the concentration of chloride ion rapidly was increased and chloride ion was discharged in the first 3 hours from the initiation of the adsorption operation. This indicates that nitrate ion was adsorbed by conducting ion exchange with chloride ion in the tunnel sites. Adsorption of fluoride ion was observed until 7 hours from the initiation of adsorption.
Initial concentration:
F⁻: 111.17 mg/l
NO₃⁻: 541.77 mg/l

### (2) Mixture solution of F⁻ and SO₄²⁻

Using the iron oxyhydroxide-containing adsorbent material B, an adsorption experiment was conducted to a solution containing both fluoride ion and sulfate ion. Figure 9 shows the results. Figure 9 shows the changes over time of concentrations of fluoride ion, sulfate ion and chloride ion discharged over the adsorption operation. In the experiment, fluoride ion and sulfate ion were adsorbed and, at the same time, the concentration of chloride ion was rapidly increased and chloride ion was discharged in the first 3 hours of the adsorption operation. This indicates that fluoride ion and sulfate ion were adsorbed by conducting ion exchange with chloride ion in the tunnel sites.
Initial concentration:
F⁻: 94.60 mg/l
SO₄²⁻: 316.14 mg/l

### (3) Mixture solution of NO₃ and SO₄²⁻

Using the iron oxyhydroxide-containing adsorbent material B, an adsorption experiment was conducted to a solution containing both sulfate ion and nitrate ion. Figure 10 shows the results. Figure 10 shows the changes over time of concentrations of sulfate ion, nitrate ion and chloride ion discharged over the adsorption operation. In the experiment, nitrate ion was adsorbed and, at the same time, the concentration of chloride ion was rapidly increased and chloride ion was discharged in the first 3 hours of adsorption operation. This indicates that nitrate ion was adsorbed by conducting ion exchange with chloride ion in the tunnel sites.

Adsorption of sulfate ion was observed until 8 hours from the initiation of the adsorption operation.
Initial concentration:
NO₃⁻: 661.75 mg/l
SO₄²⁻: 361.7 mg/l

### Example III-3

Using an apparatus shown in Fig. 14 equipped with adsorption column I filed with the "iron oxyhydroxide-containing adsorbent material A (water treatment)" obtained in Example III-1 and adsorption columns II and III filed with the "iron oxyhydroxide-containing adsorbent material B (hydrochloric acid treatment)" obtained in Example III-2, water containing phosphate ion and nitrate ion was subjected to adsorption and desorption.

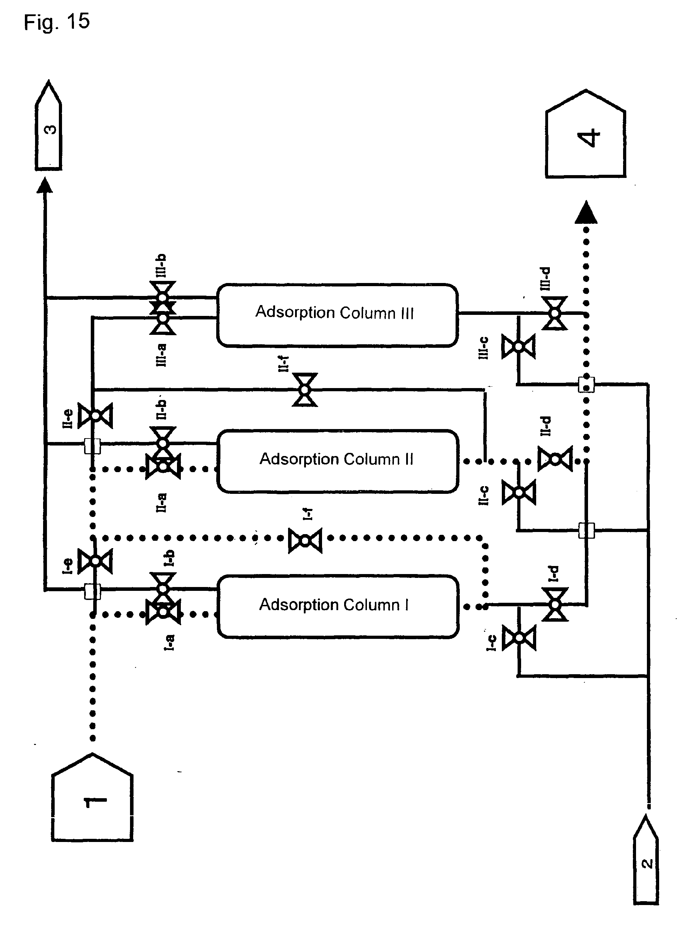

In Figs. 15 to 17, dotted lines show water flows.

The first treatment operation (Fig. 15): While keeping valves I-a, I-f, II-a and II-d open, water containing phosphate ion and nitrate ion was supplied from a tank 1. In the adsorption column I, phosphate ion was adsorbed but nitrate ion was not adsorbed. In the adsorption column II, nitrate ion was adsorbed. The treated water discharged from the adsorption column II was introduced into a tank for treated water 4.

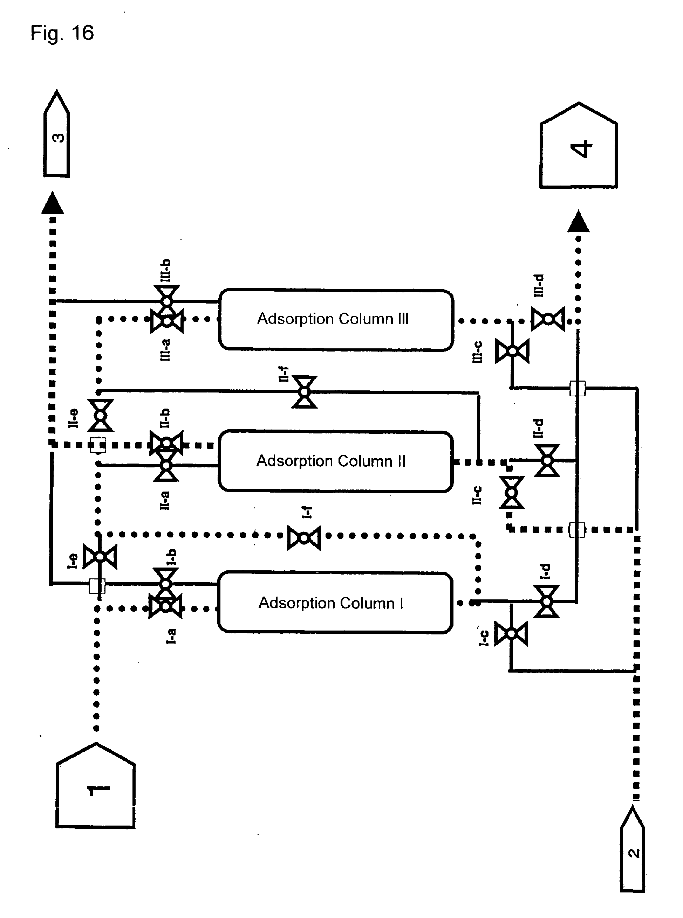

The second treatment operation (Fig. 16): After a predetermined time period, the valves II-e, III-a and III-d were opened, and valves II-a and II-d were closed. Phosphate ion was adsorbed in the adsorption column I, and nitrate ion was adsorbed in the adsorption column III.

Subsequently, while keeping the valves II-c and II-b open, the adsorbed nitrate ion was recovered by passing 2.5 mol/l aqueous NaOH solution through the adsorption column II from a NaOH solution tank 2, and the iron oxyhydroxide-containing adsorbent material B was then made reusable by passing 0.001 to 0.01 mol/l hydrochloric acid (not shown) through the adsorption column II.

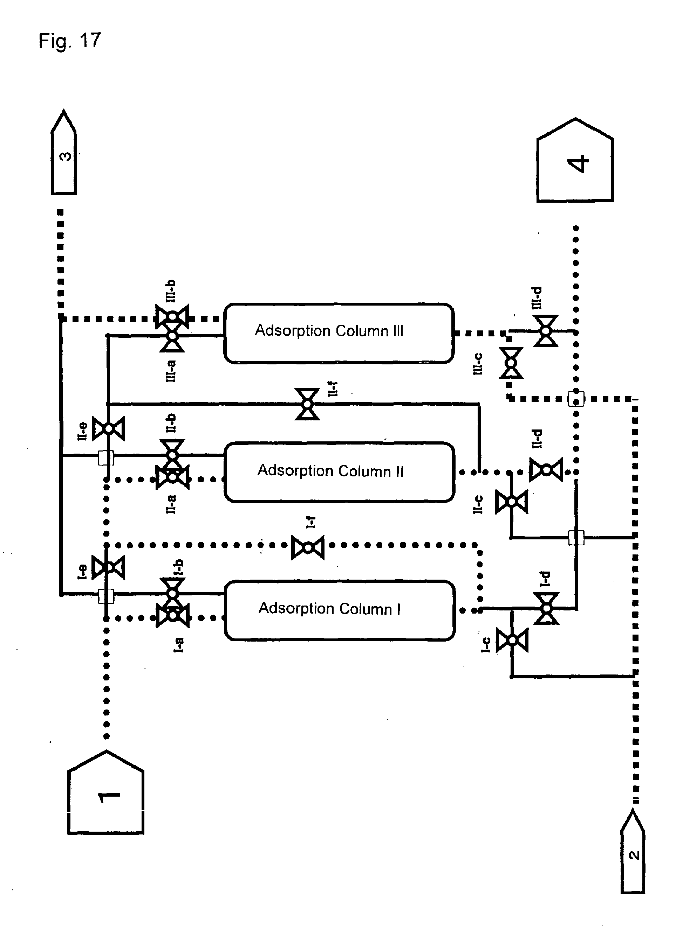

The third treatment operation (Fig. 17): Further after a predetermined time period, the valves II-a and II-d were opened, and the valves II-e and III-a were closed. Phosphate ion was adsorbed in the adsorption column I, and nitrate ion was adsorbed in the adsorption column II.

Subsequently, while keeping the valves III-c and III-b open, the adsorbed nitrate ion was recovered by passing 2.5 mol/l aqueous NaOH solution through the adsorption column III from a NaOH solution tank 2, and iron oxyhydroxide-containing adsorbent material B was then made reusable by passing 0.001 to 0.01 mol/l hydrochloric acid (not shown) through the adsorption column III.

By repeating the second and third operations, adsorption and desorption of nitrate ion were conducted in adsorption columns II and III.

In the adsorption column I, adsorption of phosphate ion continued for a relatively long time (for example, Test Example III-1 and Fig. 6). Before adsorption ability to phosphate ion being saturated, supply of the water to be treated was stopped, and the valves I-c and I-b were opened, 2.5 mol/l aqueous NaOH solution supplied from the NaOH solution tank 2 was passed through the adsorption column I to recover the adsorbed phosphate ion, making the iron oxyhydroxide-containing adsorbent material A reusable (not shown).

By repeating the above operations, phosphate ion and nitrate ion can be effectively and selectively separated and recovered.

## Claims

1. A method for producing an iron oxyhydroxide comprising the steps of:
(I-a): adding a base to an aqueous iron ion-containing solution and adjusting its pH to 9 or less to obtain a precipitate that contains an iron oxyhydroxide;
(I-b): drying the resultant precipitate at a temperature of 100°C or lower to obtain an iron oxyhydroxide;
(I-c): contacting the resultant iron oxyhydroxide with water; and
(I-d): heating the resultant iron oxyhydroxide under a gas atmosphere having an inert gas concentration of 80% or greater at a temperature within the range from 100 to 280°C.

2. A method for producing an iron oxyhydroxide according to claim 1, wherein the pH is adjusted within the range from 3.5 to 5.5 in Step (I-a).

3. A method for producing an iron oxyhydroxide according to claim 1 or 2, wherein the drying in the Step (I-b) is conducted at a temperature within the range from 40 to 60°C.

4. A method for producing an iron oxyhydroxide according to any one of claims 1 to 3, wherein the Step (I-d) is conducted under a gas atmosphere having a nitrogen concentration of 80% or greater and oxygen concentration of 20% or less.

5. A method for producing an iron oxyhydroxide according to any one of claims 1 to 4, wherein the Step (I-d) is conducted at a heating temperature within the range from 120 to 260°C.

6. An iron oxyhydroxide-containing adsorbent material comprising an iron oxyhydroxide obtained in a method of any one of claims 1 to 5 as a main component.

7. An iron oxyhydroxide-containing adsorbent material according to claim 6, wherein the iron oxyhydroxide has a BET specific surface area of 100 to 450 m²/g, and pore size distribution (dV/dR) measured by the BJH method of 100 to 300 mm³/g/nm.

8. An iron oxyhydroxide-containing adsorbent material according to claim 6 or 7, wherein the iron oxyhydroxide has a pore radius peak of 0.8 to 3 nm, and a pore radius distribution range of 7 nm or less.

9. A method for recovering anion species comprising the steps of:
contacting water that contains anion species to an iron oxyhydroxide-containing adsorbent material of any one of claims 6 to 8;
adsorbing the contained anion species; and
desorbing the adsorbed anion species.

10. A method for producing an iron oxyhydroxide comprising the steps of:
(I-a): adding a base to an aqueous iron ion-containing solution and adjusting its pH to 7 or less to obtain a precipitate that contains an iron oxyhydroxide; and
(II-b): heating the precipitate at a temperature of 100°C or lower under an inert gas atmosphere having an oxygen concentration of 20% or less to obtain an iron oxyhydroxide.

11. A method for producing an iron oxyhydroxide according to claim 10, wherein the heating in the Step (II-b) is conducted under an atmosphere whose carbon dioxide concentration is 50% or greater at a temperature within the range from 30 to 100°C.

12. A method for producing an iron oxyhydroxide according to claim 10 or 11, which further comprises the following steps after the Step (II-b):
(II-c): contacting the resultant iron oxyhydroxide with water; and
(II-d): heating the iron oxyhydroxide obtained in the Step (II-c) under an inert gas atmosphere having an oxygen concentration of 20% or less at a temperature within the range from 100 to 250°C.

13. A method for producing an iron oxyhydroxide according to claim 12, wherein the Step (II-d) is conducted under an inert gas atmosphere having a nitrogen concentration of 80% or greater.

14. An iron oxyhydroxide-containing adsorbent material comprising an iron oxyhydroxide obtained in a method according to any one of claims 10 to 13 as a main component.

15. An iron oxyhydroxide-containing adsorbent material according to claim 14, wherein the median particle diameter of iron oxyhydroxide aggregates is 0.3 to 4.0 mm.

16. An iron oxyhydroxide-containing adsorbent material according to claim 14 or 15, wherein the iron oxyhydroxide has a BET specific surface area of 100 to 450 m²/g, and pore size distribution (dV/dR) measured by the BJH method of 100 to 300 mm³/g/nm.

17. An iron oxyhydroxide-containing adsorbent material according to any one of claims 14 to 16, wherein the iron oxyhydroxide has a pore radius peak of 0.8 to 3 nm, and a pore radius distribution range of 7 nm or less.

18. An iron oxyhydroxide-containing adsorbent material comprising an iron oxyhydroxide obtained in a method according to any one of claims 10 to 13 as a main component,
the iron oxyhydroxide-containing adsorbent material having the phosphorus adsorption removal rate of 65% when adding 1 g of the adsorbent material to 50 mg/l phosphorus concentration solution in such a manner that the adsorbent material concentration becomes 1 g/l.

19. A method for recovering anion species comprising the steps of:
adsorbing anion species by contacting water that contains the anion species with an iron oxyhydroxide-containing adsorbent material obtained in any one of claims 14 to 18; and
desorbing the adsorbed anion species.

20. An iron oxyhydroxide-containing adsorbent material (iron oxyhydroxide-containing adsorbent material A) obtained by sequentially treating an iron oxyhydroxide with an aqueous base solution and water;
the iron oxyhydroxide being obtained by the steps of:
(III-a): adding a base to an aqueous iron ion-containing solution and adjusting its pH to 9 or less to obtain a precipitate that contains an iron oxyhydroxide; and
(III-b): drying the precipitate at a temperature of 100°C or lower to obtain an iron oxyhydroxide.

21. An iron oxyhydroxide-containing adsorbent material (iron oxyhydroxide-containing adsorbent material A) according to claim 20, wherein the iron oxyhydroxide is obtained by Method (I) comprising the steps of:
(I-a): adding a base to an aqueous iron ion-containing solution and adjusting its pH to 9 or less to obtain a precipitate that contains an iron oxyhydroxide;
(I-b): drying the resultant precipitate at a temperature of 100°C or lower to obtain an iron oxyhydroxide;
(I-c) : contacting the resultant iron oxyhydroxide with water; and
(I-d): heating the resultant iron oxyhydroxide under a gas atmosphere having an inert gas concentration of 80% or greater at a temperature within the range from 100 to 280°C,
or Method (II) comprising the steps of:
(II-a): adding a base to an aqueous iron ion-containing solution and adjusting its pH to 7 or less to obtain a precipitate that contains an iron oxyhydroxide; and
(II-b): heating the precipitate at a temperature of 100°C or lower under an inert gas atmosphere having an oxygen concentration of 20% or less to obtain an iron oxyhydroxide.

22. A method for selectively separating and recovering phosphate ion comprising the steps of:
contacting water that contains phosphate ion and other anion species to an "iron oxyhydroxide-containing adsorbent material A" of claim 20 or 21 to selectively adsorbing phosphate ion; and
desorbing the adsorbed phosphate ion.

23. An iron oxyhydroxide-containing adsorbent material (iron oxyhydroxide-containing adsorbent material B) obtained by sequentially treating an iron oxyhydroxide with an aqueous base solution and hydrochloric acid;
the iron oxyhydroxide being obtained by the steps of:
(III-a): adding a base to an aqueous iron ion-containing solution and adjusting its pH to 9 or less to obtain a precipitate that contains an iron oxyhydroxide; and
(III-b): drying the resultant precipitate at a temperature of 100°C or lower to obtain an iron oxyhydroxide.

24. A method for selectively separating and recovering phosphate ion and nitrate ion comprising the step of:
sequentially contacting water that contains phosphate ion and nitrate ion to (1) the "iron oxyhydroxide-containing adsorbent material A" of claim 20, and (2) the "iron oxyhydroxide containing adsorbent material B" of claim 23.

25. A method for selectively separating and recovering phosphate ion and nitrate ion comprising the step of passing water that contains phosphate ion and nitrate ion through:
(1) an adsorption column filled with the "iron oxyhydroxide-containing adsorbent material A" of claim 20; and
(2) an adsorption column filled with the "iron oxyhydroxide-containing adsorbent material B" of claim 23.

26. An apparatus for recovering anion species comprising an adsorption column I filled with the iron oxyhydroxide-containing adsorbent material A of claim 20 and adsorption columns II and III filled with the iron oxyhydroxide-containing adsorbent material B of claim 23,
the adsorption column I comprising an inlet for water to be treated and an outlet for discharging the treated water,
the adsorption column I being connected to the adsorption columns II and III by a pipe that introduces the treated water discharged from the outlet of the adsorption column I to the adsorption columns II and III, and
the pipe being provided with a valve that can switch the flow of the treated water from the adsorption column I to the adsorption column II or III.

27. A method for selectively separating and recovering phosphate ion and nitrate ion using the apparatus for recovering anion species of claim 26 comprising the steps of:
passing water that contains phosphate ion and nitrate ion through the adsorption column I to adsorb phosphate ion;
sending the treated water into an adsorption column II to adsorb nitrate ion;
after a predetermined time period, switching the valve to the adsorption column III so that the treated water is sent into the adsorption column III to adsorb nitrate ion while subjecting the adsorption column II, which adsorbed nitrate ion, to a treatment for desorbing nitrate ion;
after a further predetermined time period, switching the valve to the adsorption column II so as to send the treated water into the adsorption column II to adsorb nitrate ion while subjecting the adsorption column III, which adsorbed nitrate ion, to a treatment for desorbing nitrate ion.

28. A method for selectively separating and recovering phosphate ion and nitrate ion according to claim 27, wherein desorption of phosphate ion is conducted in the column I in which phosphate ion have been adsorbed.
